# EUROPEAN PATENT APPLICATION

(11) **EP 4 277 226 A1**
(43) Date of publication of application: **15.11.2023**
(21) Application number: 23172696.9
(22) Date of filing: 11.05.2023
(51) Int. Cl.: H04L 45/00

(54) **PACKET TRANSMISSION METHOD, TRANSMISSION CONTROL METHOD, APPARATUS, AND SYSTEM**

(30) Priority: 12.05.2022 CN 202210518528
(71) Applicant: Huawei Technologies Co., Ltd., Shenzhen, Guangdong 518129 (CN)
(72) Inventor: DONG, Jiajia, Shenzhen, 518129 (CN); HU, Zhibo, Shenzhen, 518129 (CN); SHENG, Cheng, Shenzhen, 518129 (CN); LI, Zhenbin, Shenzhen, 518129 (CN); HE, Hongwei, Shenzhen, 518129 (CN); DONG, Lin, Shenzhen, 518129 (CN)
(74) Representative: Thun, Clemens

(57) **Abstract**

A packet transmission method, a transmission control method, an apparatus, and a system are disclosed, and relate to the field of network technologies. A segment routing (segment routing, SR) path includes a first network node and a second network node. There are a plurality of communication links between the first network node and the second network node. After obtaining a first packet, the first network node determines a first communication link based on a first link quality identifier carried in the first packet, and forwards the first packet to the second network node through the first communication link. The first link quality identifier indicates a first quality requirement on the communication link between the first network node and the second network node. The plurality of communication links between the first network node and the second network node include the first communication link, and link quality of the first communication link meets the first quality requirement. In this application, a quantity of transmission paths maintained by a head node of the SR path can be reduced, and performance of the head node can be ensured.

## Description

### TECHNICAL FIELD

This application relates to the field of network technologies, and in particular, to a packet transmission method, a transmission control method, an apparatus, and a system.

### BACKGROUND

In an SR network, a head node may determine, based on a service-level agreement (service-level agreement, SLA) requirement of a service, a transmission path that meets the SLA requirement of the service from a plurality of transmission paths from the head node to a tail node, and encapsulate, in a packet of the service, a segment list that indicates the transmission path. An intermediate node forwards the packet based on the segment list carried in the packet, until the packet reaches the tail node.

However, in the current SR network, to transmit the packet on the transmission path that meets the SLA requirement, the head node needs to maintain the plurality of transmission paths from the head node to the tail node. For example, the head node needs to maintain a plurality of segment lists. Consequently, a large quantity of transmission paths need to be maintained by the head node, affecting performance of the head node.

### SUMMARY

This application provides a packet transmission method, a transmission control method, an apparatus, and a system. The technical solutions of this application are as follows.

According to a first aspect, a packet transmission method is provided, and is applied to a first network node on an SR path. The SR path further includes a second network node, and there are a plurality of communication links between the first network node and the second network node. The method includes: The first network node obtains a first packet, where the first packet carries a first link quality identifier, and the first link quality identifier indicates a first quality requirement on the communication link between the first network node and the second network node. The first network node determines a first communication link based on the first link quality identifier, where the plurality of communication links include the first communication link, and link quality of the first communication link meets the first quality requirement. The first network node forwards the first packet to the second network node through the first communication link. The first quality requirement is a link quality requirement on the communication link between the first network node and the second network node.

According to the technical solution provided in this application, a packet transmitted on the SR path carries a link quality identifier that indicates a link quality requirement, and a network node on the SR path selects a communication link that meets the link quality requirement indicated by the link quality identifier, to forward the packet. Therefore, a quantity of transmission paths maintained by a head node of the SR path can be reduced, where for example, a quantity of segment lists maintained by the head node can be reduced, so as to avoid impact on performance of the head node due to an excessively large quantity of transmission paths maintained by the head node.

Optionally, a head node of the SR path includes a first link identifier, and the head node does not include a link identifier of a second communication link, the first link identifier indicates the first communication link, and the plurality of communication links include the second communication link. For example, the head node includes a first segment list, the first segment list includes the first link identifier, and the first segment list does not include the link identifier of the second communication link. Therefore, the head node includes the first link identifier and does not include the link identifier of the second communication link. For another example, the head node includes a first segment list, and the head node does not include a second segment list. The first segment list includes the first link identifier, and the second segment list includes the link identifier of the second communication link. Therefore, the head node includes the first link identifier and does not include the link identifier of the second communication link.

In the technical solution provided in this application, because the head node of the SR path includes the first link identifier (namely, a link identifier of the first communication link) that indicates the first communication link, and the head node does not include the link identifier of the second communication link, a quantity of link identifiers maintained by the head node can be reduced, and performance of the head node can be ensured.

Optionally, the head node of the SR path includes the first link identifier, the head node does not include a link identifier of a communication link other than the first communication link in the plurality of communication links, and the first link identifier indicates the first communication link. For example, the head node includes the first segment list, the first segment list includes the first link identifier, and the first segment list does not include the link identifier of the communication link other than the first communication link in the plurality of communication links. Therefore, the head node includes the first link identifier and does not include the link identifier of the communication link other than the first communication link in the plurality of communication links. For another example, the head node includes the first segment list, and the head node does not include a segment list other than the first segment list. The first segment list includes the first link identifier, and the another segment list includes the link identifier of the communication link other than the first communication link in the plurality of communication links. Therefore, the head node includes the first link identifier and does not include the link identifier of the communication link other than the first communication link in the plurality of communication links.

In the technical solution provided in this application, because the head node of the SR path includes the first link identifier that indicates the first communication link, and the head node does not include the link identifier of the communication link other than the first communication link in the plurality of communication links, a quantity of link identifiers maintained by the head node can be reduced, and performance of the head node can be ensured.

Optionally, the first link quality identifier is the first link identifier. To be specific, in this application, the first link identifier is reused as the first link quality identifier to indicate the first quality requirement on the communication link between the first network node and the second network node.

Optionally, the first link identifier is a first segment identifier (segment identifier, SID).

Optionally, the first SID is an adjacency SID. The adjacency SID may be an adjacency SID in SR, an adjacency SID in the segment routing internet protocol version 6 (segment routing internet protocol version 6, SRv6), or an adjacency label in segment routing multi-protocol label switching (segment routing multi-protocol label switching, SR-MPLS). The adjacency SID in SRv6 is an endpoint with layer-3 cross-connect segment identifier (endpoint with layer-3 cross-connect segment identifier, END.X SID).

Optionally, that the first network node determines a first communication link based on the first link quality identifier includes: The first network node determines the first quality requirement based on the first link quality identifier. The first network node determines the first communication link based on the first quality requirement and link quality of the plurality of communication links.

Optionally, that the first network node determines the first quality requirement based on the first link quality identifier includes: The first network node determines the first quality requirement based on the first link quality identifier and a first mapping relationship, where the first mapping relationship includes a mapping relationship between the first link quality identifier and the first quality requirement.

Optionally, that the first network node determines the first communication link based on the first quality requirement and link quality of the plurality of communication links includes: The first network node determines the first communication link based on the first quality requirement and a second mapping relationship, where the second mapping relationship includes the first link identifier and the link quality of the first communication link, and the first link identifier indicates the first communication link. The second mapping relationship is a mapping relationship between a link identifier and link quality, each link identifier in the second mapping relationship indicates a communication link between the first network node and the second network node, and link quality corresponding to each link identifier in the second mapping relationship is link quality of the communication link indicated by the link identifier.

Optionally, before the first network node determines the first quality requirement based on the first link quality identifier and the first mapping relationship, the method further includes: The first network node receives a first control message sent by a controller, where the first control message includes the first mapping relationship. Alternatively, the first network node receives the first mapping relationship entered by a user.

Optionally, before the first network node determines the first communication link based on the first quality requirement and the second mapping relationship, the method further includes: The first network node obtains the link quality of the first communication link. The first network node generates the second mapping relationship based on the first link identifier and the link quality of the first communication link. For example, the first network node obtains link quality of each communication link between the first network node and the second network node, and the first network node generates the second mapping relationship based on link identifiers of the plurality of communication links between the first network node and the second network node and the link quality of the plurality of communication links.

Optionally, there are at least two first communication links, the at least two first communication links are for load sharing, and load sharing weights of the at least two first communication links are determined based on link quality of the at least two first communication links.

According to the technical solution provided in this application, because link quality of a communication link dynamically changes, a load sharing weight of the communication link is determined based on the link quality of the communication link, so that the load sharing weight of the communication link can be dynamically adjusted.

Optionally, link quality of any one of the plurality of communication links includes at least one of the following: a latency of the any communication link, a jitter of the any communication link, or a packet loss rate of the any communication link. The first quality requirement includes at least one of the following: a latency requirement, a jitter requirement, or a packet loss rate requirement. A latency requirement on the any communication link includes that the latency of the any communication link is less than a latency threshold. A jitter requirement on the any communication link includes that the jitter of the any communication link is less than a jitter threshold. A packet loss rate requirement on the any communication link includes that the packet loss rate of the any communication link is less than a packet loss rate threshold.

Optionally, the plurality of communication links include at least one of a physical link or a logical link. The logical link may be a tunnel, for example, but is not limited to a generic routing encapsulation (generic routing encapsulation, GRE) tunnel, a virtual extensible local area network (virtual extensible local area network, VXLAN) tunnel, or an SR tunnel.

Optionally, the first packet carries a segment list, and the segment list includes the first link quality identifier. For example, the segment list includes the first link identifier, and the first link quality identifier is the first link identifier included in the segment list.

Optionally, the first network node is the head node or an intermediate node of the SR path.

Optionally, the first network node is the head node of the SR path, and that the first network node obtains a first packet includes: The first network node receives a second control message sent by the controller, where the second control message includes the segment list, and the segment list includes the first link quality identifier. The first network node generates the first packet based on the segment list.

Optionally, the first network node is the head node of the SR path, and that the first network node obtains a first packet includes: The first network node determines the segment list based on a network topology of an SR network and a quality of service requirement, where the segment list includes the first link quality identifier, and the SR network includes the SR path. The first network node generates the first packet based on the segment list.

According to a second aspect, a transmission control method is provided. The method includes: A controller obtains a first link quality identifier, where the first link quality identifier indicates a first quality requirement on a communication link between a first network node and a second network node, both the first network node and the second network node are network nodes on a segment routing SR path, and there are a plurality of communication links between the first network node and the second network node. The controller sends a first control message to the first network node, where the first control message includes the first link quality identifier. The first quality requirement is a link quality requirement on the communication link between the first network node and the second network node.

According to the technical solution provided in this application, the controller obtains the first link quality identifier, and sends the first link quality identifier to the first network node. In this way, the first network node may determine the first quality requirement on the communication link between the first network node and the second network node based on the first link quality identifier. After the first network node obtains a first packet carrying the first link quality identifier, the first network node determines, from the plurality of communication links between the first network node and the second network node based on the first link quality identifier carried in the first packet, a first communication link that meets the first quality requirement, and forwards the first packet to the second network node through the first communication link. That is, in this application, a packet transmitted on the SR path carries a link quality identifier that indicates a link quality requirement, and a network node on the SR path selects a communication link that meets the link quality requirement indicated by the link quality identifier, to forward the packet. Therefore, a quantity of transmission paths maintained by a head node of the SR path can be reduced, so as to avoid impact on performance of the head node due to an excessively large quantity of transmission paths maintained by the head node.

Optionally, the plurality of communication links include a first communication link and a second communication link, a head node of the SR path includes a first link identifier, the head node does not include a link identifier of the second communication link, and the first link identifier indicates the first communication link. In this way, a quantity of link identifiers maintained by the head node can be reduced, and performance of the head node can be ensured.

Optionally, the plurality of communication links include the first communication link, the head node of the SR path includes the first link identifier, the head node does not include a link identifier of a communication link other than the first communication link in the plurality of communication links, and the first link identifier indicates the first communication link. In this way, a quantity of link identifiers maintained by the head node can be reduced, and performance of the head node can be ensured.

Optionally, the first link quality identifier is the first link identifier. To be specific, in this application, the first link identifier is reused as the first link quality identifier to indicate the first quality requirement on the communication link between the first network node and the second network node.

Optionally, the first link identifier is a first SID.

Optionally, the first SID is an adjacency SID. The adjacency SID can be an adjacency SID in SR, an adjacency SID in SRv6, or an adjacency label in SR-MPLS. The adjacency SID in SRv6 is an END.X SID.

Optionally, that a controller obtains a first link quality identifier includes: The controller obtains a first mapping relationship, where the first mapping relationship includes a mapping relationship between the first link quality identifier and the first quality requirement, and the first control message includes the first mapping relationship.

Optionally, link quality of any one of the plurality of communication links includes at least one of the following: a latency of the any communication link, a jitter of the any communication link, or a packet loss rate of the any communication link. The first quality requirement includes at least one of the following: a latency requirement, a jitter requirement, or a packet loss rate requirement. A latency requirement on the any communication link includes that the latency of the any communication link is less than a latency threshold. A jitter requirement on the any communication link includes that the jitter of the any communication link is less than a jitter threshold. A packet loss rate requirement on the any communication link includes that the packet loss rate of the any communication link is less than a packet loss rate threshold.

Optionally, the plurality of communication links include at least one of a physical link or a logical link. The logical link may be a tunnel, for example, but not limited to a GRE tunnel, a VXLAN tunnel, or an SR tunnel.

Optionally, the method further includes: The controller determines a segment list based on a network topology of an SR network and a quality of service requirement, where the segment list includes the first link quality identifier, and the SR network includes the SR path. The controller sends a second control message to the head node of the SR path, where the second control message includes the segment list.

According to a third aspect, a packet transmission apparatus is provided, and includes modules configured to perform the packet transmission method according to any one of the first aspect or the optional manners of the first aspect.

According to a fourth aspect, a transmission control apparatus is provided, and includes modules configured to perform the transmission control method according to any one of the second aspect or the optional manners of the second aspect.

The modules in the third aspect or the fourth aspect may be implemented based on software, hardware, or a combination of software and hardware, and may be randomly combined or divided based on a specific implementation.

According to a fifth aspect, a packet transmission apparatus is provided, and includes a memory and a processor.

The memory is configured to store a computer program.

The processor is configured to execute the computer program stored in the memory, so that the packet transmission apparatus performs the packet transmission method according to any one of the first aspect or the optional manners of the first aspect.

According to a sixth aspect, a transmission control apparatus is provided, and includes a memory and a processor.

The memory is configured to store a computer program.

The processor is configured to execute the computer program stored in the memory, so that the transmission control apparatus performs the transmission control method according to any one of the second aspect or the optional manners of the second aspect.

According to a seventh aspect, a communication system is provided, and includes a first network node and a controller.

The first network node includes the packet transmission apparatus provided in the third aspect or the fifth aspect.

The controller includes the transmission control apparatus provided in the fourth aspect or the sixth aspect.

According to an eighth aspect, a computer-readable storage medium is provided. The computer-readable storage medium stores a computer program. When being executed, the computer program implements the packet transmission method provided in any one of the first aspect or the optional manners of the first aspect, or implements the transmission control method provided in any one of the second aspect or the optional manners of the second aspect.

According to a ninth aspect, a computer program product is provided. The computer program product includes a program or code. When the program or code is executed, the packet transmission method provided in any one of the first aspect or the optional manners of the first aspect is implemented, or the transmission control method provided in any one of the second aspect or the optional manners of the second aspect is implemented.

According to a tenth aspect, a chip is provided. The chip includes a programmable logic circuit and/or program instructions. When the chip is running, the chip is configured to implement the packet transmission method provided in any one of the first aspect or the optional manners of the first aspect, or implement the transmission control method provided in any one of the second aspect or the optional manners of the second aspect.

The technical solutions provided in this application bring the following beneficial effects.

According to the packet transmission method, the transmission control method, the apparatus, and the system that are provided in this application, the SR path includes the first network node and the second network node, and there are the plurality of communication links between the first network node and the second network node. After obtaining the first packet, the first network node determines, based on the first link quality identifier carried in the first packet, the first communication link included in the plurality of communication links, and forwards the first packet to the second network node through the first communication link. The first link quality identifier indicates the first quality requirement on the communication link between the first network node and the second network node, and the first communication link meets the first quality requirement. The first network node may be the head node or the intermediate node of the SR path, and the second network node may be a next-hop node of the first network node. That is, in this application, the packet transmitted on the SR path carries the link quality identifier that indicates the link quality requirement, and the network node on the SR path selects the communication link that meets the link quality requirement indicated by the link quality identifier, to forward the packet. Therefore, the packet can be transmitted on the SR path that meets the requirement, and the quantity of transmission paths maintained by the head node of the SR path can be reduced, where for example, the quantity of segment lists maintained by the head node of the SR path is reduced, so as to avoid impact on the performance of the head node due to the excessively large quantity of transmission paths maintained by the head node.

### BRIEF DESCRIPTION OF DRAWINGS

FIG. 1 is a schematic diagram of an SR network according to an embodiment of this application;
FIG. 2 is a schematic diagram of another SR network according to an embodiment of this application;
FIG. 3 is a schematic diagram of still another SR network according to an embodiment of this application;
FIG. 4 is a flowchart of a packet transmission method according to an embodiment of this application;
FIG. 5 is a flowchart of determining a first communication link according to an embodiment of this application;
FIG. 6 is a flowchart of a transmission control method according to an embodiment of this application;
FIG. 7 is a flowchart of another transmission control method according to an embodiment of this application;
FIG. 8 is a schematic structural diagram of a packet transmission apparatus according to an embodiment of this application;
FIG. 9 is a schematic structural diagram of a transmission control apparatus according to an embodiment of this application;
FIG. 10 is a schematic structural diagram of a network apparatus according to an embodiment of this application; and
FIG. 11 is a schematic structural diagram of another network apparatus according to an embodiment of this application.

### DESCRIPTION OF EMBODIMENTS

The following further describes in detail implementations of this application with reference to accompanying drawings.

In an SR network, there may be a plurality of transmission paths between a head node and a tail node. The head node may determine, from the plurality of transmission paths based on an SLA requirement of a service, a transmission path that meets the SLA requirement of the service, and encapsulate, in a packet of the service, a segment list that indicates the transmission path. An intermediate node forwards the packet based on the segment list carried in the packet, until the packet reaches the tail node. After decapsulating the packet, the tail node forwards the packet based on a private network route.

The SR network may be a software-defined networking in a wide area network (software-defined networking in a wide area network, SD-WAN) SR network, different network nodes in the SR network may be connected in a transport network (transport network, TN), and a plurality of TNs may exist between different network nodes. A communication link traversing the TN may be established between different network nodes based on a transport network interface (transport network port, TNP) route, and a plurality of communication links may be established between the different network nodes. Each transmission path in the SR network may include a plurality of segments of communication links, and each segment of communication link is a communication link between two network nodes on the transmission path. The segment list that indicates the transmission path may include a plurality of link identifiers that are arranged in order, and each link identifier indicates a segment of communication link on the transmission path. The TN may include a multi-protocol label switching (multi-protocol label switching, MPLS) network, an internet (internet), and the like. A communication link is also referred to as a communication connection (connection), and a transmission path in the SR network is also referred to as an SR path.

For example, after the head node in the SR network determines the transmission path that meets the SLA requirement, the head node performs underlay (underlay) tunnel encapsulation and overlay (overlay) routing encapsulation on the packet, and an encapsulated packet includes an underlay header and an overlay header. The underlay header is for the packet to traverse the TN. The underlay header includes different content based on different types of TNs. For example, the underlay header includes an internet protocol (internet protocol, IP) header or an Internet Protocol version 6 (internet protocol version 6, IPv6) header, and may further include a GRE header, a VXLAN header, an SR tunnel (tunnel) header, or the like. The overlay header indicates how to perform routing between network nodes, and the segment list that indicates the transmission path is located in the overlay header.

Segment lists that indicate transmission paths vary with different SR network types and different overlay encapsulation types. For example, the SR network is an SRv6 network, the overlay encapsulation type is SRv6 encapsulation, and the segment list that indicates the transmission path is an SRv6 segment list (segment list). For another example, the SR network is an SR-MPLS network, the overlay encapsulation type is SR-MPLS encapsulation, and the segment list that indicates the transmission path is an MPLS label stack. SRv6 defines various segments in the form of SIDs. Semantics of the SIDs can be flexibly defined. Common SIDs include an endpoint segment identifier (endpoint segment identifier, END SID) and an END.X SID. Both the END SID and the END.X SID are in the form of IPv6 addresses. The End SID is used to identify an SRv6 node (where a network node supporting the SRv6 protocol may be referred to as an SRv6 node). The END.X SID is used to identify a communication link in the SRv6 network (that is, the END.X SID is a link identifier). The SRv6 segment list includes a plurality of END.X SIDs that are arranged in order. Similar to SRv6, SR-MPLS defines segments in the form of MPLS labels. The MPLS label may include a node label and an adjacency label. The node label is used to identify an SR-MPLS node (where a network node supporting the SR-MPLS protocol may be referred to as an SR-MPLS node). The adjacency label is used to identify a communication link in the SR-MPLS network (that is, the adjacency label may be a link identifier). The MPLS label stack includes a plurality of adjacency labels that are arranged in order. The SRv6 segment list and MPLS label stack are standardized path expressions in the industry. In some service scenarios, a user can customize a path expression. For example, the user may customize an identifier (identifier, ID) or indication information that indicates a communication link. The segment list that indicates the transmission path may include a plurality of such IDs or pieces of such indication information that are arranged in order. This is not limited in embodiments of this application.

The foregoing describes a current SR technology. In the current SR technology, to transmit the packet on the transmission path that meets the SLA requirement, the head node in the SR network needs to maintain the plurality of transmission paths from the head node to the tail node. Consequently, the head node needs to maintain a relatively large quantity of transmission paths, and performance of the head node is easily affected. For example, there are a total of 100 transmission paths from the head node to the tail node, and the head node needs to maintain 100 segment lists that indicate the 100 transmission paths, so that during service forwarding, the head node may determine, in the 100 transmission paths, the transmission path that meets the SLA requirement of the service.

Based on the foregoing technical problem existing in the current SR technology, this application provides a technical solution. In the technical solution, a packet transmitted on an SR path carries a link quality identifier that indicates a link quality requirement. A network node on the SR path determines, based on the link quality identifier carried in the packet and from communication links between the network node and a next-hop node of the network node, a communication link that meets the link quality requirement indicated by the link quality identifier, and forwards the packet to the next-hop node of the network node through the communication link that meets the link quality requirement indicated by the link quality identifier. For example, the SR path includes a first network node and a second network node. The first network node may be a head node or an intermediate node of the SR path. The second network node may be a next-hop node of the first network node. There are a plurality of communication links between the first network node and the second network node. A first packet obtained by the first network node carries a first link quality identifier. The first link quality identifier indicates a first quality requirement on the communication link between the first network node and the second network node. The first network node may determine, based on the first link quality identifier, a first communication link that is included in the plurality of communication links and that meets the first quality requirement, and forward the first packet to the second network node through the first communication link. In this application, the packet transmitted on the SR path carries the link quality identifier that indicates the link quality requirement, and the network node on the SR path selects the communication link based on the link quality identifier carried in the packet, to forward the packet. Therefore, not only the packet can be transmitted on the SR path that meets the requirement, but also a quantity of transmission paths maintained by the head node of the SR path can be reduced, where for example, a quantity of segment lists maintained by the head node of the SR path can be reduced, so as to avoid impact on performance of the head node due to an excessively large quantity of transmission paths maintained by the head node.

The link quality identifier (for example, the first link quality identifier) in this application may be a link identifier, for example, an adjacency SID. Optionally, the first packet carries a segment list, and the first link quality identifier is an adjacency SID that is located in the segment list and that is released by the first network node. In other words, in this application, a new meaning is assigned to the link identifier (for example, the adjacency SID), so that the link identifier not only indicates a communication link, but also indicates a link quality requirement. The link identifier with the new meaning is carried in the packet, so that the network node on the SR path can select, based on the link identifier carried in the packet, the communication link that meets the requirement, to forward the packet, so as to reduce the quantity of transmission paths maintained by the head node of the SR path. For example, there are a total of 100 transmission paths from the head node to the tail node of the SR path. In this application, the head node may maintain only the segment list including the link quality identifier (the link identifier with the new meaning given in this application), so that the packet carrying the segment list can be transmitted on the SR path that meets the requirement. Compared with the current SR technology (in which the head node needs to maintain 100 segment lists), in this application, the quantity of segment lists maintained by the head node is greatly reduced. This helps improve performance of the head node.

Technical solutions of this application relate to smart policy routing (smart policy routing, SPR). For ease of understanding of the technical solutions of this application, SPR-related content is first described before the technical solutions of this application are described.

SPR is a route selection mechanism. In SPR, a network node may actively detect link quality of communication links, and select, based on the link quality of the communication links, a communication link that meets a quality of service requirement, to forward a service packet, to implement smart route selection. For example, a plurality of communication links are established between two network nodes, and either of the two network nodes may be used as an active detection node to detect link quality of each of the plurality of communication links, and select, based on link quality of the plurality of communication links, a communication link that meets the quality of service requirement from the plurality of communication links to forward the service packet to the other network node. Optionally, there are at least two communication links that meet the quality of service requirement in the plurality of communication links, and the at least two communication links may include a primary communication link and a secondary communication link. The network node preferentially selects the primary communication link to forward the service packet. If link quality of the primary communication link degrades and does not meet the quality of service requirement, the network node performs switching to the secondary communication link for forwarding the service packet.

A link quality detection process may be performed periodically. An example in which a plurality of communication links between a network node 1 and a network node 2 include a communication link 1, a communication link 2, and a communication link 3 is used for description. The network node 1 may generally send a heartbeat keepalive (keepalive, KA) packet to the network node 2. Each time the network node 2 receives a heartbeat KA packet sent by the network node 1, the network node 2 may send a heartbeat KA acknowledgement (acknowledgement, ACK) packet corresponding to the heartbeat KA packet to the network node 1. A link quality detection periodicity may be the same as a heartbeat periodicity (namely, a periodicity in which the network node 1 sends the heartbeat KA packet) of the network node 1.

For example, in each detection periodicity, the network node 1 obtains statistics data 1 of the communication link 1, and the network node 2 obtains statistics data 2 of the communication link 1. The network node 1 carries the statistics data 1 in the heartbeat KA packet sent to the network node 2. The network node 2 determines link quality of the communication link 1 based on the statistics data 1 and the statistics data 2, and carries the link quality of the communication link 1 in the heartbeat KA ACK packet sent to the network node 1. Alternatively, the network node 2 carries the statistics data 2 in the heartbeat KAACK packet sent to the network node 1, and the network node 1 determines link quality of the communication link 1 based on the statistics data 1 and the statistics data 2. The statistics data 1 may include at least one of the following: a quantity of service packets sent by the network node 1 through the communication link 1 within the detection periodicity, or sending time stamps of the service packets sent by the network node 1 through the communication link 1 within the detection periodicity. The statistics data 2 may include at least one of the following: a quantity of service packets received by the network node 2 through the communication link 1 within the detection periodicity, or receiving timestamps of the service packets received by the network node 2 through the communication link 1 within the detection periodicity. That the network node 2 determines link quality of the communication link 1 based on the statistics data 1 and the statistics data 2 may include: The network node 2 determines a packet loss quantity and/or a packet loss rate of the communication link 1 based on the quantity of service packets sent by the network node 1 through the communication link 1 within the detection periodicity and the quantity of service packets received by the network node 2 through the communication link 1 within the detection periodicity. In addition, the network node 2 determines a latency and a jitter of the communication link 1 based on the receiving timestamps of the service packets received by the network node 2 through the communication link 1 within the detection periodicity and the sending timestamps of the service packets sent by the network node 1 through the communication link 1 within the detection periodicity. A process in which the network node 1 determines the link quality of the communication link 1 based on the statistics data 1 and the statistics data 2 is similar to the foregoing process. For a detection process of each communication link 3 in the communication link 2 and the communication link 3, refer to the detection process of the communication link 1. Details are not described herein again.

The foregoing describes the SPR, and the following describes an application scenario of embodiments of this application.

An application scenario of this application is an SR network. For example, the SR network is an SRv6 network or an SR-MPLS network.

The SR network provided in this application includes a plurality of network nodes, different network nodes may be connected through TNs, and there may be a plurality of TNs between the different network nodes. A communication link traversing the TN may be established between the different network nodes based on a TNP route, and a plurality of communication links may be established between two network nodes. Any communication link included in the SR network may be a physical link or a logical link, and the logical link may be a tunnel, for example, but is not limited to a GRE tunnel, a VXLAN tunnel, or an SR tunnel. When a plurality of communication links are established between two network nodes, the plurality of communication links may include at least one of a physical link or a logical link. This is not limited in embodiments of this application.

The plurality of network nodes in the SR network may include a head node and a tail node. There may be a plurality of transmission paths between the head node and the tail node. Each transmission path may include a plurality of segments of communication links, and each segment of communication link is a communication link between two network nodes on the transmission path. The transmission path in the SR network is also referred to as an SR path. Any network node in the SR network may be used as the head node, or may be used as the tail node. Generally, the head node is an ingress network node of the SR network, and the tail node is an egress network node of the SR network. The ingress network node is configured to provide a traffic ingress, the egress network node is configured to provide a traffic egress, both the ingress network node and the egress network node may be edge network nodes, and the ingress network node and the egress network node may be used by a workstation to access the SR network. In some implementation scenarios, a network node is also referred to as a network node, and the network node may be a switch, a router, a gateway (gateway, GW), or the like. For example, networking of the SR network is point-of-presence (point-of-presence, POP) networking, and the network node in the SR network is a POP GW. The workstation accessing the SR network may be a host, a server, a base station, a virtual machine (virtual machine, VM), or the like. The host may be a smartphone, a tablet computer, a desktop computer, an internet of things (internet of things, IoT) node, or the like. This is not limited in embodiments of this application.

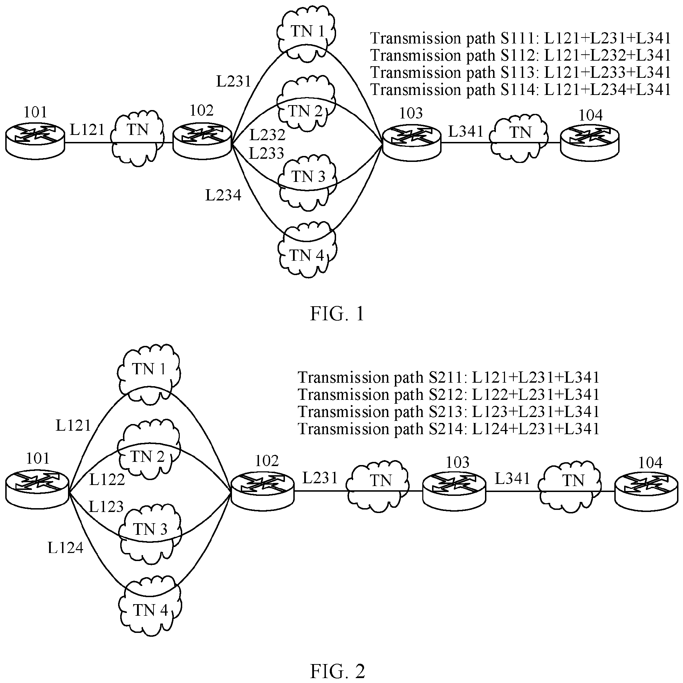

In an example, FIG. 1 is a schematic diagram of an SR network according to an embodiment of this application. The SR network includes a plurality of network nodes 101 to 104. Different network nodes are connected through a TN, and a connection line between any two network nodes represents a communication link traversing a TN between the two network nodes. For example, the network node 101 is connected to the network node 102 through a TN, and a connection line between the network node 101 and the network node 102 indicates a communication link L121 that traverses the TN between the network node 101 and the network node 102. The network node 102 and the network node 103 are connected through four TNs: TN 1 to TN 4. Four connection lines between the network node 102 and the network node 103 indicate four communication links L231, L232, L233, and L234 that respectively traverse the four TNs between the network node 102 and the network node 103 (where the communication link L231 traverses TN 1, the communication link L232 traverses TN 2, the communication link L233 traverses TN 3, and the communication link L234 traverses TN 4). The network node 103 is connected to the network node 104 through a TN, and a connection line between the network node 103 and the network node 104 indicates a communication link L341 that traverses the TN between the network node 103 and the network node 104. The TN may include an MPLS network, the internet, and the like. TNs connecting different network nodes may be the same or different, and a plurality of TNs connecting two network nodes may be the same or different. For example, the TN connecting the network node 101 and the network node 102, the TNs connecting the network node 102 and the network node 103, and the TN connecting the network node 103 and the network node 104 may be the same or different, and at least two TNs in TN 1 to TN 4 may be the same, or TN 1 to TN 4 do not have a same TN.

In the SR network shown in FIG. 1, the network node 101 may be a head node, the network node 104 may be a tail node, there are four transmission paths S111 to S114 between the head node and the tail node, and both the network node 102 and the network node 103 are intermediate nodes on the transmission paths S111 to S114. The transmission path S111 is L121+L231+L341 (in other words, the communication links L121, L231, and L341 are sequentially connected to form the transmission path S111). The transmission path S112 is L121+L232+L341 (in other words, the communication links L121, L232, andL341 are sequentially connected to form the transmission path S112). The transmission path S113 is L121+L233+L341 (in other words, the communication links L121, L233, and L341 are sequentially connected to form the transmission path S113). The transmission path S114 is L121+L234+L341 (in other words, the communication links L121, L234, andL341 are sequentially connected to form the transmission path S114).

Refer to FIG. 1. In a current SR technology, the network node 101 (namely, the head node) needs to maintain four segment lists that indicate the transmission paths S 111 to S114. The network node 101 determines, based on an SLA requirement of a service, a transmission path that meets the SLA requirement of the service and that is in the transmission paths S111 to S114, and encapsulates, in a packet of the service, the segment list that indicates the transmission path that meets the SLA requirement of the service, so as to indicate the packet of the service to be transmitted on the transmission path that meets the SLA requirement of the service. For example, segment lists 111 to 114 sequentially indicate the transmission paths S111 to S114. The segment list 111 is <A:1::1, A:2::1, A:3::1>, the segment list 112 is <A:1::1, A:2::2, A:3::1>, the segment list 113 is <A:1::1, A:2::3, A:3::1>, and the segment list 114 is <A:1::1, A:2::4, A3::1>. "A:1::1" is a link identifier of the communication link L121, "A:2::1" is a link identifier of the communication link L231, "A:2::2" is a link identifier of the communication link L232, "A:2::3" is a link identifier of the communication link L233, "A:2::4" is a link identifier of the communication link L234, and "A:3::1" is a link identifier of the communication link L341. It is assumed that the network node 101 determines that the transmission path S111 meets the SLA requirement of the service, and the network node 101 encapsulates the segment list 111 into the packet of the service. The network node 101 forwards the packet to the network node 102 through the communication link L121 based on "A:1::1" included in the segment list 111. The network node 102 forwards the packet to the network node 103 through the communication link L231 based on "A:2:: 1" included in the segment list 111. The network node 103 forwards the packet to the network node 104 through the communication link L341 based on "A:3::1" included in the segment list 111.

However, in this application, the head node maintains a link quality identifier, and the head node may encapsulate, in a packet of a service based on an SLA requirement of the service, a link quality identifier that indicates a link quality requirement of the service, so that a network node on a transmission path of the packet selects, based on the link quality identifier carried in the packet, a communication link that meets the link quality requirement, to forward the packet. Therefore, the packet of the service can be transmitted on a transmission path that meets the SLA requirement of the service. For example, the head node maintains a segment list including a link quality identifier, and the head node may encapsulate, based on the SLA requirement of the service, the segment list including the link quality identifier into the packet of the service, to indicate the packet to be transmitted on the transmission path that meets the SLA requirement of the service.

Refer to FIG. 1. In this application, the network node 101 (namely, the head node) may maintain a segment list A1, a segment list A2, and a segment list A3. The segment list A1 may be <SID 101-D, SID 102-D, SID 103-D>, the segment list A2 may be <SID 101-L, SID 102-L, SID 103-L>, and the segment list A3 may be <SID 101-J, SID 102-J, SID 103-J>. SID 101-D, SID 102-D, SID 103-D, SID 101-L, SID 102-L, SID 103-L, SID 101-J, SID 102-J, and SID 103-J are all link quality identifiers. SID 101-D indicates that a link quality requirement on the communication link between the network node 101 and the network node 102 is a low latency, SID 102-D indicates that a link quality requirement on the communication link between the network node 102 and the network node 103 is a low latency, and SID 103-D indicates that a link quality requirement on the communication link between the network node 103 and the network node 104 is a low latency. SID 101-L indicates that a link quality requirement on the communication link between the network node 101 and the network node 102 is a low packet loss rate, SID 102-L indicates that a link quality requirement on the communication link between the network node 102 and the network node 103 is a low packet loss rate, and SID 103-L indicates that a link quality requirement on the communication link between the network node 103 and the network node 104 is a low packet loss rate. SID 101-J indicates that a link quality requirement on the communication link between the network node 101 and the network node 102 is a low jitter, SID 102-J indicates that a link quality requirement on the communication link between the network node 102 and the network node 103 is a low jitter, and SID 103-J indicates that a link quality requirement on the communication link between the network node 103 and the network node 104 is a low jitter. It is assumed that the SLA requirement of the service is a low latency. The network node 101 encapsulates the segment list A1 into the packet of the service. The network node 101 determines, based on "SID 101-D" included in the segment list A1, a communication link (assumed to be the communication link L121) that meets the link quality requirement indicated by "SID 101-D" and that is in the communication link between the network node 101 and the network node 102, and forwards the packet to the network node 102 through the communication link L121. The network node 102 determines, based on "SID 102-D" included in the segment list A1, a communication link (assumed to be the communication link L232) that meets the link quality requirement indicated by "SID 102-D" and that is in the communication links between the network node 102 and the network node 103, and forwards the packet to the network node 103 through the communication link L232. The network node 103 determines, based on "SID 103-D" included in the segment list A1, a communication link (assumed to be the communication link L231) that meets the link quality requirement indicated by "SID 103-D" and that is in the communication link between the network node 103 and the network node 104, and forwards the packet to the network node 104 through the communication link L341. In a specific example, one of SID 101-D, SID 101-L, and SID 101-J is "A:1::1", and one of SID 103-D, SID 103-L, and SID 103-J is "A:3::1". For example, SID 101-D is "A:1::1", SID 102-D is "A:2::1", and SID 103-D is "A:3::1". In this case, the segment list A1 is specifically <A:1::1, A:2::1, A3::1>. To be specific, in this application, the link identifier "A:1::1" of the communication link L121 is reused as a link quality identifier to indicate that the link quality requirement on the communication link between the network node 101 and the network node 102 is a low latency; the link identifier "A:2::1" of the communication link L231 is reused as a link quality identifier to indicate that the link quality requirement on the communication link between the network node 102 and the network node 103 is a low latency; and the link identifier "A:3::1" of the communication link L341 is reused as a link quality identifier to indicate that the link quality requirement on the communication link between the network node 103 and the network node 104 is a low latency. This section is described by using an example in which the SLA requirement of the service is a low latency. For a service whose SLA requirement is a low packet loss rate, the network node 101 may encapsulate the segment list A2 into the packet of the service, and the network nodes 101 to 103 forward the packet based on the segment list A2. For a service whose SLA requirement is a low jitter, the network node 101 may encapsulate the segment list A3 into the packet of the service, and the network nodes 101 to 103 forward the packet based on the segment list A3. For an implementation process in which the network nodes 101 to 103 forward the packet based on the segment list A2 and an implementation process in which the network nodes 101 to 103 forward the packet based on the segment list A3, refer to an implementation process in which the network nodes 101 to 103 forward the packet based on the segment list A1. Details are not described herein again.

FIG. 1 is described by using an example in which there are a plurality of communication links between an intermediate node (for example, the network node 102) and a next-hop node of the intermediate node. In some implementation scenarios, there are a plurality of communication links between a head node and a next-hop node of the head node. In another example, FIG. 2 is a schematic diagram of another SR network according to an embodiment of this application. Different from the SR network shown in FIG. 1, in the SR network shown in FIG. 2, a network node 101 is connected to a network node 102 through TN 1 to TN 4, four communication links L121, L122, L123, and L124 that traverse TN 1 to TN 4 exist between the network node 101 and the network node 102, and one communication link exists between the network node 102 and a network node 103 and between the network node 103 and a network node 104.

In the SR network shown in FIG. 2, the network node 101 may be a head node, the network node 104 may be a tail node, there are four transmission paths S211 to S214 between the head node and the tail node, and both the network node 102 and the network node 103 are intermediate nodes on the transmission paths S211 to S214. The transmission path S211 is L121+L231+L341 (in other words, the communication links L121, L231, and L341 are sequentially connected to form the transmission path S211). The transmission path S212 is L122+L231+L341 (in other words, the communication links L122, L231, and L341 are sequentially connected to form the transmission path S212). The transmission path S213 is L123+L231+L341 (in other words, the communication links L123, L231, and L341 are sequentially connected to form the transmission path S213). The transmission path S214 is L124+L231+L341 (in other words, the communication link L124, L231, and L341 are sequentially connected to form the transmission path S214).

Refer to FIG. 2. In a current SR technology, the network node 101 (namely, the head node) needs to maintain four segment lists that indicate the transmission paths S211 to S214. For example, segment lists 211 to 214 sequentially indicate the transmission paths S211 to S214. The segment list 211 is <A:1::1, A:2::1, A:3::1>, the segment list 212 is <A:1::2, A:2::1, A:3::1>, the segment list 213 is <A:1::3, A:2::1, A:3::1>, and the segment list 214 is <A:1::4, A:2::1, A3::1>. "A:1::1" is a link identifier of the communication link L121, "A:1::2" is a link identifier of the communication link L122, "A:1::3" is a link identifier of the communication link L123, "A:1::4" is a link identifier of the communication link L124, "A:2::1" is a link identifier of the communication link L231, and "A:3::1" is a link identifier of communication link L341. It is assumed that the network node 101 determines that the transmission path S212 meets an SLA requirement of a service, and the network node 101 encapsulates the segment list 212 into a packet of the service. The network node 101 forwards the packet to the network node 102 through the communication link L122 based on "A:1::2" included in the segment list 212. The network node 102 forwards the packet to the network node 103 through the communication link L231 based on "A:2::1" included in the segment list 212. The network node 103 forwards the packet to the network node 104 through the communication link L341 based on "A:3::1" included in the segment list 212. However, in this application, the network node 101 still needs to maintain only the segment list A1, the segment list A2, and the segment list A3, so that the packet can be transmitted on the transmission path that meets the SLA requirement.

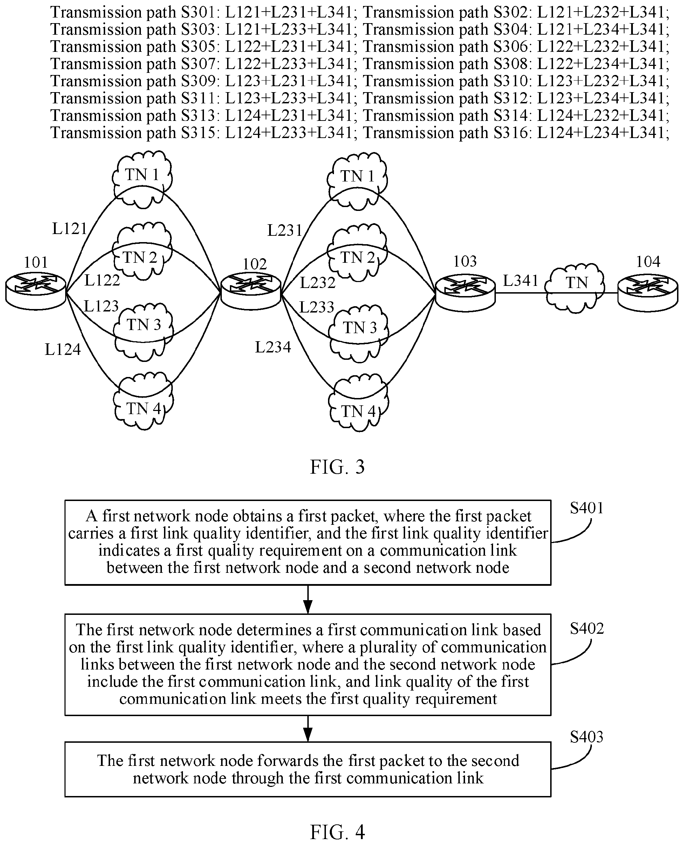

In some implementation scenarios, there are a plurality of communication links between the head node and the next-hop node of the head node, and there are a plurality of communication links between each of at least one intermediate node and a next-hop node of each intermediate node. In still another example, FIG. 3 is a schematic diagram of still another SR network according to an embodiment of this application. Different from the SR networks shown in FIG. 1 and FIG. 2, in the SR network shown in FIG. 3, a network node 101 is connected to a network node 102 through TN 1 to TN 4, and there are four communication links L121, L122, L123, and L124 that traverse TN 1 to TN 4 between the network node 101 and the network node 102. The network node 102 is connected to a network node 103 through TN 1 to TN 4. There are four communication links L231, L232, L233, and L234 that traverse TN 1 to TN 4 between the network node 102 and the network node 103. There is one communication link between the network node 103 and a network node 104.

In the SR network shown in FIG. 3, the network node 101 may be a head node, the network node 104 may be a tail node, there are 16 transmission paths S301 to S316 between the head node and the tail node, and both the network node 102 and the network node 103 are intermediate nodes on the transmission paths S301 to S316. In a current SR technology, the network node 101 (namely, the head node) needs to maintain 16 segment lists that indicate the 16 transmission paths. However, in this application, the network node 101 still needs to maintain only the segment list A1, the segment list A2, and the segment list A3, so that a packet can be transmitted on a transmission path that meets an SLA requirement.

It can be learned through comparison between the current SR technology and the technical solution of this application that, in the current SR technology, the head node needs to maintain segment lists of a quantity of transmission paths between the head node and the tail node, and the quantity of segment lists maintained by the head node is relatively large. In this application, the head node may maintain the segment list including the link quality identifier, and a network node selects, based on a link quality identifier carried in a packet, a communication link that meets a requirement, to forward the packet, so that the quantity of segment lists maintained by the head node can be greatly reduced.

It should be noted that the SR networks shown in FIG. 1 to FIG. 3 are merely examples, and are not intended to limit the technical solutions of this application. In an implementation process, the SR network may include more or fewer network nodes than those shown in FIG. 1 to FIG. 3, and a quantity of network nodes may be configured based on a requirement. In addition, the SR network may further include a controller, to control a network node in the SR network. The controller may exist independently of the network node, or may be integrated into the network node. This is not limited in embodiments of this application.

The foregoing describes an application scenario of this application, and the following describes method embodiments of this application.

Before the method embodiments of this application are described, an SR path in this application is first described.

The SR path in this application includes a first network node and a second network node, and there are a plurality of communication links between the first network node and the second network node. The second network node may be a next-hop node of the first network node. The plurality of communication links may include at least one of a physical link or a logical link. The logical link may be a tunnel, for example, but not limited to a GRE tunnel, a VXLAN tunnel, or an SR tunnel.

For example, the SR path is any transmission path in FIG. 1 or FIG. 3, the first network node is the network node 102, the second network node is the network node 103, and a head node of the SR path is the network node 101. Alternatively, the SR path is any transmission path in FIG. 2 or FIG. 3, the first network node is the network node 101, the second network node is the network node 102, and a head node of the SR path is the network node 101 (in other words, the first network node is the head node of the SR path).

In an embodiment of this application, the plurality of communication links between the first network node and the second network node include a first communication link and a second communication link, the head node of the SR path includes a first link identifier (namely, a link identifier of the first communication link) that indicates the first communication link, and the head node does not include a link identifier of the second communication link. In this way, a quantity of link identifiers maintained by the head node can be reduced, and performance of the head node can be ensured.

FIG. 1 is used as an example. The head node of the SR path is the network node 101, the first network node is the network node 102, the second network node is the network node 103, and the plurality of communication links (namely, the plurality of communication links between the network node 102 and the network node 103) between the first network node and the second network node include the communication links L231, L232, L233, and L234. The first communication link may be the communication link L231, and the first link identifier is a link identifier "A:2::1" of the communication link L231. The second communication link may be the communication link L232, and the link identifier of the second communication link is a link identifier "A:2::2" of the communication link L232. The network node 101 (namely, the head node of the SR path) may include the first link identifier "A:2:: 1", and the network node 101 does not include the link identifier "A:2::2" of the second communication link L232. Therefore, the quantity of link identifiers maintained by the network node 101 (namely, the head node of the SR path) can be reduced, and performance of the network node 101 can be ensured.

In an implementation, the head node of the SR path includes a first segment list, the first segment list includes the first link identifier, and the first segment list does not include the link identifier of the second communication link. Therefore, the head node includes the first link identifier and does not include the link identifier of the second communication link. For example, as shown in FIG. 1, the first link identifier may be the link identifier "A:2::1" of the communication link L231, and the link identifier of the second communication link may be the link identifier "A:2::2" of the communication link L232. The first segment list may be a segment list 111: <A:1::1, A:2::1, A:3::1> that indicates the transmission path S111. The first segment list 111 includes the first link identifier "A:2::1", and the first segment list 111 does not include the link identifier "A:2::2" of the second communication link L232. The network node 101 (namely, the head node of the SR path) may include the first segment list 111. Because the head node of the SR path includes the first segment list, the first segment list includes the first link identifier, and the first segment list does not include the link identifier of the second communication link, a quantity of link identifiers maintained by the head node can be reduced, and performance of the head node can be ensured.

In another implementation, the head node of the SR path includes a first segment list, and the head node does not include a second segment list, where the first segment list includes the first link identifier, and the second segment list includes the link identifier of the second communication link. Therefore, the head node includes the first link identifier and does not include the link identifier of the second communication link. For example, as shown in FIG. 1, the first link identifier may be the link identifier "A:2::1" of the communication link L231, and the link identifier of the second communication link may be the link identifier "A:2::2" of the communication link L232. The first segment list may be a segment list 111: <A:1::1, A:2::1, A:3::1> that indicates the transmission path 5111, and the second segment list may be a segment list 112: <A:1::1, A:2::2, A:3::1> that indicates the transmission path S112. The first segment list 111 includes the first link identifier "A:2::1", and the second segment list 112 includes the link identifier "A:2::2" of the second communication link L232. The network node 101 (namely, the head node of the SR path) may include the first segment list 111, and the network node 101 does not include the second segment list 112. Because the head node of the SR path includes the first segment list, and the head node does not include the second segment list, a quantity of segment lists maintained by the head node can be reduced.

In another embodiment of this application, the plurality of communication links between the first network node and the second network node include a first communication link, the head node of the SR path includes a first link identifier (namely, a link identifier of the first communication link) that indicates the first communication link, and the head node does not include a link identifier of a communication link other than the first communication link in the plurality of communication links. In this way, a quantity of link identifiers maintained by the head node can be reduced, and performance of the head node can be ensured.

FIG. 1 is used as an example. The head node of the SR path is the network node 101, the first network node is the network node 102, the second network node is the network node 103, and the plurality of communication links (namely, the plurality of communication links between the network node 102 and the network node 103) between the first network node and the second network node include the communication links L231, L232, L233, and L234. The first communication link may be the communication link L231, communication links other than the first communication link in the plurality of communication links include the communication links L232, L233, and L234, and the first link identifier is a link identifier "A:2::1" of the communication link L231. The network node 101 (namely, the head node of the SR path) may include the first link identifier "A:2::1", and the network node 101 does not include a link identifier "A:2::2" of the communication link L232, a link identifier "A:2::3" of the communication link L233, and a link identifier "A:2::4" of the communication link L234. Therefore, the quantity of link identifiers maintained by the network node 101 (namely, the head node of the SR path) can be reduced, and performance of the network node 101 can be ensured.

In an implementation, the head node of the SR path includes a first segment list, the first segment list includes the first link identifier, and the first segment list does not include the link identifier of the communication link other than the first communication link in the plurality of communication links. In this way, the head node includes the first link identifier and does not include the link identifier of the communication link other than the first communication link in the plurality of communication links. For example, as shown in FIG. 1, the first link identifier may be the link identifier "A:2::1" of the communication link L231, the first segment list may be a segment list 111: <A:1::1, A:2::1, A:3::1> that indicates the transmission path S111, the first segment list 111 includes the first link identifier "A:2::1", and the first segment list 111 does not include the link identifier "A:2::2" of the communication link L232, the link identifier "A:2::3" of the communication link L233, and the link identifier "A:2::4" of the communication link L234. The network node 101 (namely, the head node of the SR path) may include the first segment list 111. The head node of the SR path includes the first segment list, the first segment list includes the first link identifier, and the first segment list does not include the link identifier of the communication link other than the first communication link in the plurality of communication links. Therefore, the quantity of link identifiers maintained by the head node can be reduced.

In another implementation, the head node of the SR path includes a first segment list, and the head node does not include a segment list other than the first segment list. The first segment list includes the first link identifier, and the another segment list includes the link identifier of the communication link other than the first communication link in the plurality of communication links. In this way, the head node includes the first link identifier and does not include the link identifier of the communication link other than the first communication link in the plurality of communication links. For example, as shown in FIG. 1, the first link identifier may be the link identifier "A:2:: 1" of the communication link L231, the first segment list may be a segment list 111: <A:1::1, A:2::1, A:3::1> that indicates the transmission path S 111, and the first segment list 111 includes the first link identifier "A:2::1". A segment list 112 <A:1::1, A:2::2, A:3::1> that indicates the transmission path S112 includes the link identifier "A:2::2" of the communication link L232. A segment list 112 <A:1::1, A:2::3, A:3::1> that indicates the transmission path S113 includes the link identifier "A:2::3" of the communication link L233. A segment list 114 <A:1::1, A:2::4, A:3::1> that indicates the transmission path S114 includes the link identifier "A:2::4" of the communication link L234. The network node 101 (namely, the head node of the SR path) includes the first segment list 111 and does not include the segment list 112, the segment list 113, and the segment list 114. Because the head node of the SR path includes the first segment list and does not include the segment list other than the first segment list, a quantity of segment lists maintained by the head node can be reduced.

In embodiments of this application, the link identifier may be an SID, and specifically, may be an adjacency SID. The adjacency SID in this application includes an adjacency SID in SR, an adjacency SID in SRv6, and an adjacency label in SR-MPLS. The adjacency SID in SRv6 may be specifically an END.X SID. Optionally, the first link identifier is a first SID, and may be specifically an adjacency SID. For example, the first link identifier is an adjacency SID in SR, or the first link identifier is an END.X SID in SRv6, or the first link identifier is an adjacency label in SR-MPLS.

The foregoing describes the SR path in this application. The following describes an embodiment of a packet transmission method in this application.

FIG. 4 is a flowchart of a packet transmission method according to an embodiment of this application. The packet transmission method is applied to a first network node on an SR path. As shown in FIG. 4, the method includes the following steps S401 to S403.

S401: The first network node obtains a first packet, where the first packet carries a first link quality identifier, and the first link quality identifier indicates a first quality requirement on a communication link between the first network node and a second network node.

A link quality identifier indicates a link quality requirement on a communication link. Link quality of any communication link may include at least one of the following: a latency of the any communication link, a jitter of the any communication link, or a packet loss rate of the any communication link. A link quality requirement on the any communication link may include at least one of the following: a latency requirement, a jitter requirement, or a packet loss rate requirement. The first link quality identifier indicates the first quality requirement on the communication link between the first network node and the second network node, and the first quality requirement may include at least one of the following: a latency requirement, a jitter requirement, or a packet loss rate requirement.

A latency requirement on the any communication link may include that the latency of the any communication link is less than a latency threshold. A jitter requirement on the any communication link may include that the jitter of the any communication link is less than a jitter threshold. A packet loss rate requirement on the any communication link may include that the packet loss rate of the any communication link is less than a packet loss rate threshold. The latency threshold, the jitter threshold, and the packet loss rate threshold may be flexibly set based on a service requirement. For different services, the latency threshold may be different, the jitter threshold may be different, and the packet loss rate threshold may be different. Specific values of the latency threshold, the jitter threshold, and the packet loss rate threshold are not limited in embodiments of this application.

In embodiments of this application, the first network node may be a head node or an intermediate node of the SR path.

In an optional embodiment, the first network node is the head node of the SR path, and that the first network node obtains a first packet includes: The first network node obtains the first link quality identifier, and the first network node generates the first packet based on the first link quality identifier. For example, the first link quality identifier is released by the first network node, and the first network node obtains the first link quality identifier released by the first network node. Alternatively, the first link quality identifier is sent by a controller to the first network node, and the first network node receives the first link quality identifier sent by the controller. Optionally, the first link quality identifier is included in a segment list, the first network node may obtain the segment list, and the first network node generates the first packet based on the segment list. For example, the first network node encapsulates the segment list into a received initial packet to obtain the first packet. For example, the first network node receives a second control message sent by the controller, where the second control message includes the segment list, and the segment list is obtained by the controller through path computation. Alternatively, the first network node performs path computation based on a network topology of an SR network and a quality of service requirement of the initial packet, to determine the segment list. This is not limited in embodiments of this application. The second control message may be a border gateway protocol (border gateway protocol, BGP) message, a network configuration protocol (network configuration protocol, NETCONF) message, a path computation element communication protocol (path computation element communication protocol, PCEP) message, or a message based on another proprietary protocol. This is not limited in this application.

In another optional embodiment, the first network node is the intermediate node on the SR path, and that the first network node obtains a first packet includes: The first network node receives the first packet sent by a previous-hop node of the first network node. Optionally, the first packet includes a segment list, and the segment list includes the first link quality identifier.

In embodiments of this application, the first link quality identifier may be a first link identifier, and the first link identifier indicates a first communication link between the first network node and the second network node. To be specific, in this application, the first link identifier is reused as the first link quality identifier to indicate the first quality requirement on the communication link between the first network node and the second network node. In actual application of this application, a link identifier of a communication link between any network node on the SR path and a next-hop node of the any network node may be reused as a link quality identifier to indicate a link quality requirement on the communication link between the any network node and the next-hop node of the any network node. For example, as shown in FIG. 1, a segment list 111 that indicates the transmission path S111 is <A:1::1, A:2::1, A:3::1>. "A:1::1" is a link identifier of the communication link L121, "A:2::1" is a link identifier of the communication linkL231, and "A:3::1" is a link identifier of the communication link L341. In this application, "A:1::1" may be reused as a link quality identifier to indicate a link quality requirement on the communication link between the network node 101 and the network node 102, "A:2::1" is reused as a link quality identifier to indicate a link quality requirement on the communication link between the network node 102 and the network node 103, and "A:3::1" is reused as a link quality identifier to indicate a link quality requirement on the communication link between the network node 103 and the network node 104. Optionally, the segment list included in the first packet may be the segment list 111. In the segment list 111, "A:2::1" is the link identifier of the communication link L231, and "A:2::1" may indicate the link quality requirement (for example, the first quality requirement) on the communication link between the network node 102 and the network node 103. In this embodiment of this application, an example in which a link identifier is reused as a link quality identifier is used for description. In another embodiment of this application, the link quality identifier and the link identifier are two identifiers that are independent of each other, the link identifier only indicates a communication link, and the link quality identifier indicates a link quality requirement on the communication link. Specifically, whether the link identifier is reused as the link quality identifier, or the link quality identifier and the link identifier that are independent of each other are set for corresponding indication may be determined based on an actual requirement. This is limited in embodiments of this application.

S402: The first network node determines the first communication link based on the first link quality identifier, where the plurality of communication links between the first network node and the second network node include the first communication link, and link quality of the first communication link meets the first quality requirement.

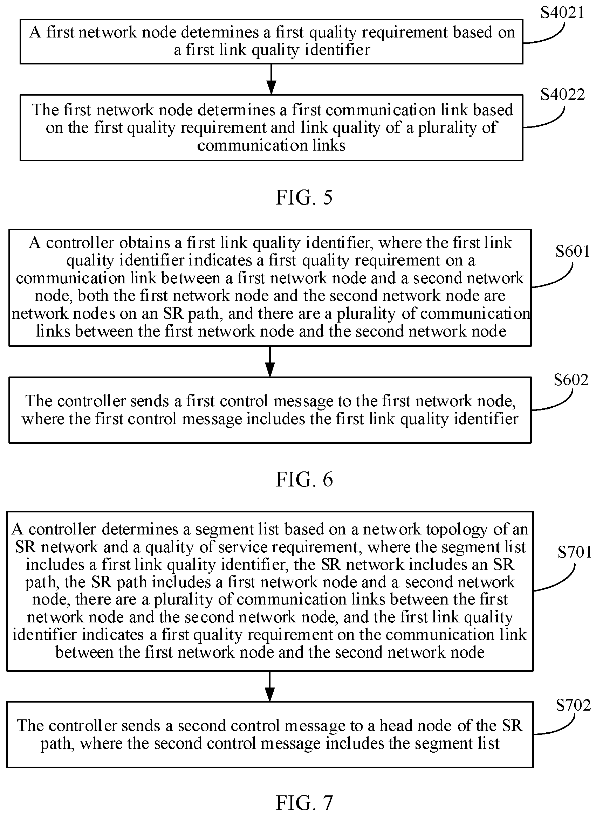

In an example, FIG. 5 is a flowchart of a method for determining a first communication link by a first network node based on a first link quality identifier according to an embodiment of this application. The method includes the following steps S4021 and S4022.

S4021: The first network node determines the first quality requirement based on the first link quality identifier.

In an optional embodiment, the first network node includes a first mapping relationship, the first mapping relationship is a mapping relationship between a link quality identifier and a link quality requirement, and a link quality requirement corresponding to each link quality identifier in the first mapping relationship is a link quality requirement indicated by each link quality identifier. The first mapping relationship may include a mapping relationship between the first link quality identifier and the first quality requirement, and the first quality requirement is a link quality requirement indicated by the first link quality identifier. The first network node may determine the first quality requirement based on the first link quality identifier and the first mapping relationship. For example, the first mapping relationship is a mapping table, the first network node queries the first mapping relationship based on the first link quality identifier, and the first network node determines, in the first mapping relationship, a link quality requirement corresponding to the first link quality identifier as the first quality requirement.

In an example, refer to FIG. 1. The first network node is the network node 102, the second network node is the network node 103, and the first mapping relationship included in the first network node may be shown in the following Table 1.

**Table 1**

| Link quality identifier | Link quality requirement |
|---|---|
| SID 102-D | Low latency (for example, a latency is less than a latency threshold) |
| SID 102-L | Low packet loss rate (for example, a packet loss rate is less than a packet loss rate threshold) |
| SID 102-J | Low jitter (for example, a jitter is less than a jitter threshold) |

Refer to Table 1. The link quality identifiers "SID 102-D", "SID 102-L", and "SID 102-J" each indicate a link quality requirement on the communication link between the network node 102 and the network node 103. The link quality requirement corresponding to the link quality identifier "SID 102-D" is a low latency, the link quality requirement corresponding to the link quality identifier "SID 102-L" is a low packet loss rate, and the link quality requirement corresponding to the link quality identifier "SID 102-J" is a low jitter. Assuming that the first link quality identifier is "SID 102-D", the first network node (namely, the network node 102) determines, based on the first link quality identifier and the first mapping relationship shown in Table 1, that the first quality requirement is a low latency (for example, a latency is less than a latency threshold).

S4022: The first network node determines the first communication link based on the first quality requirement and link quality of a plurality of communication links.

The plurality of communication links are the plurality of communication links between the first network node and the second network node.

In an optional embodiment, the first network node includes a second mapping relationship, the second mapping relationship is a mapping relationship between a link identifier and link quality, each link identifier in the second mapping relationship indicates a communication link between the first network node and the second network node, and link quality corresponding to each link identifier in the second mapping relationship is link quality of the communication link indicated by the link identifier. The second mapping relationship includes a mapping relationship between the first link identifier (namely, a link identifier of the first communication link) and the link quality of the first communication link. The first network node may determine the first communication link based on the first quality requirement and the second mapping relationship. For example, the second mapping relationship is a mapping table. The first network node first determines, in the second mapping relationship, link quality that meets the first quality requirement, and then determines a link identifier that is in the second mapping relationship and that corresponds to the link quality that meets the first quality requirement. The first network node determines the link identifier corresponding to the link quality that meets the first quality requirement as the first link identifier, and determines a communication link indicated by the first link identifier as the first communication link.

In an example, still refer to FIG. 1. The first network node is the network node 102, the second network node is the network node 103, and the second mapping relationship included in the first network node may be shown in the following Table 2.

**Table 2**

| Link identifier | Link quality |
|---|---|
| SID 102-1 (for example, A:2:: 1) | Latency D1, packet loss rate L1, and jitter J1 |
| SID 102-2 (for example, A:2::2) | Latency D2, packet loss rate L2, and jitter J2 |
| SID 102-3 (for example, A:2::3) | Latency D3, packet loss rate L3, and jitter J3 |
| SID 102-4 (for example, A:2::4) | Latency D4, packet loss rate L4, and jitter J4 |

As shown in Table 2 and with reference to FIG. 1, the link identifier "SID 102-1" indicates the communication link L231 between the network node 102 and the network node 103, the link identifier "SID 102-2" indicates the communication link L232 between the network node 102 and the network node 103, the link identifier "SID 102-3" indicates the communication link L233 between the network node 102 and the network node 103, and the link identifier "SID 102-4" indicates the communication link L234 between the network node 102 and the network node 103. The link quality corresponding to the link identifier "SID 102-1" includes latency D1, packet loss rate L1, and jitter J1, indicating that a latency of the communication link L231 is D1, a packet loss rate of the communication link L231 is L1, and a jitter of the communication link L231 is J1. The link quality corresponding to the link identifier "SID 102-2" includes latency D2, packet loss rate L2, and jitter J2, indicating that a latency of the communication link L232 is D2, a packet loss rate of the communication link L232 is L2, and a jitter of the communication link L232 is J2. The link quality corresponding to the link identifier "SID 102-3" includes latency D3, packet loss rate L3, and jitter J3, indicating that a latency of the communication link L233 is D3, a packet loss rate of the communication link L233 is L3, and a jitter of the communication link L233 is J3. The link quality corresponding to the link identifier "SID 102-4" includes latency D4, packet loss rate L4, and jitter J4, indicating that a latency of the communication link L234 is D4, a packet loss rate of the communication link L234 is L4, and a jitter of the communication link L234 is J4. It is assumed that the first quality requirement is a low latency (for example, a latency is less than a latency threshold). In an example, it is assumed that latency D1 is less than the latency threshold, and latency D2, latency D3, and latency D4 are all greater than the latency threshold. In this case, the first network node (namely, the network node 102) determines, based on the first quality requirement, that a link identifier corresponding to the link quality "latency D1" that meets the first quality requirement is "SID 102-1", and the first network node determines "SID 102-1" as the first link identifier, and the first network node determines the communication link L231 indicated by "SID 102-1" as the first communication link. In another example, it is assumed that both latency D1 and latency D2 are less than the latency threshold, and both latency D3 and latency D4 are greater than the latency threshold. In this case, the first network node (namely, the network node 102) determines, based on the first quality requirement, that a link identifier corresponding to the link quality "latency D1" meeting the first quality requirement is "SID 102-1", and a link identifier corresponding to the link quality "latency D2" meeting the first quality requirement is "SID 102-2". The first network node determines "SID 102-1" and "SID 102-2" as first link identifiers, and the first network node determines both the communication link L231 indicated by "SID 102-1" and the communication link L232 indicated by "SID 102-2" as first communication links.

As described above, in this embodiment of this application, a link quality identifier may be a link identifier. To be specific, the link identifier may be reused as the link quality identifier to indicate a link quality requirement on a communication link. In other words, a meaning of the link identifier (for example, an adjacency SID) in this application may be different from an existing meaning of a link identifier. In this application, a new meaning is assigned to the link identifier, so that the link identifier not only indicates the communication link, but also indicates the link quality requirement. When the link quality identifier is the link identifier, at least one link quality identifier in Table 1 may be replaced with at least one link identifier in Table 2, and different link quality identifiers are replaced with different link identifiers. This is not limited in embodiments of this application.

In the foregoing descriptions in S4022, the plurality of communication links may be all communication links between the first network node and the second network node, or may be some communication links between the first network node and the second network node. In an optional embodiment of this application, the plurality of communication links between the first network node and the second network node are grouped into at least two link groups (link groups), each link group includes at least two communication links, and the first network node may determine the first communication link based on the first quality requirement and link quality of communication links included in a first link group. For example, the first link quality identifier is bound to the first link group, and the first network node first determines the first link group based on the first link quality identifier, and then determines the first communication link based on the first quality requirement and the link quality of the communication links included in the first link group. When there are a plurality of communication link groups between the first network node and the second network node, the second mapping relationship may include only a mapping relationship between link identifiers of the communication links in the first link group and the link quality of the communication links, or the second mapping relationship includes a mapping relationship between link identifiers of communication links in the plurality of link groups and link quality of the communication links, and further includes a mapping relationship between a link quality identifier and a link identifier, so that the first network node determines communication links included in different link groups.

S403: The first network node forwards the first packet to the second network node through the first communication link.

In this embodiment of this application, there may be one or more first communication links. When there is one first communication link, the first network node directly forwards the first packet to the second network node through the first communication link. When there are at least two first communication links, the at least two first communication links may be for load sharing, and the first network node may forward the first packet to the second network node through one of the at least two first communication links based on load sharing weights of the at least two first communication links. For example, the first network node forwards the first packet to the second network node in a per-flow load sharing manner or a per-packet load sharing manner based on the load sharing weights of the at least two first communication links. The per-flow load sharing manner is a load sharing manner at a flow granularity. In the per-flow load sharing manner, packets of a same service flow are forwarded through a same communication link, and packets of different service flows may be forwarded through different communication links or may be forwarded through a same communication link. The per-packet load sharing manner is a load sharing manner at a packet granularity. In the per-packet load sharing manner, packets of a same service flow may be forwarded through different communication links, and packets of different service flows may be forwarded through a same communication link or may be forwarded through different communication links.

In this embodiment of this application, the load sharing weights of the at least two first communication links may be determined based on link quality of the at least two first communication links. Optionally, the first quality requirement is a latency requirement (for example, a low latency), and the first network node determines the load sharing weights of the at least two first communication links based on latencies of the at least two first communication links. The example in S4022 is still used as an example. The at least two first communication links may be the communication link L231 and the communication link L232. The latency of the communication link L231 is D1, and the latency of the communication link L232 is D2. The first network node may determine that a load sharing weight of the communication link L231 is w1=D2/(D1+D2), and a load sharing weight of the communication link L232 is w2=1-D2/(D1+D2). Alternatively, the first network node may determine that a load sharing weight of the communication link L231 is w1=1-D1/(D1+D2), and a load sharing weight of the communication link L232 is w2=D1/(D1+D2). Alternatively, the first network node may determine that a load sharing weight of the communication link L231 is w1=INT(D2/(D1+D2)), and a load sharing weight of the communication link L232 is w2=1-INT(D2/(D1+D2)). Alternatively, the first network node may determine that a load sharing weight of the communication link L231 is w1=1-INT(D1/(D1+D2)), and a load sharing weight of the communication link L232 is w2=INT(D1/(D1+D2)). The symbol "/" represents a division slash, and "INT" represents rounding.

In this embodiment of this application, an implementation process is described in which the first network node determines the load sharing weights of the at least two first communication links when the first quality requirement is a latency requirement. When the first quality requirement is a packet loss rate requirement, the first network node may determine the load sharing weights of the at least two first communication links based on packet loss rates of the at least two first communication links. When the first quality requirement is a jitter requirement, the first network node may determine the load sharing weights of the at least two first communication links based on jitters of the at least two first communication links. For an implementation process in which the first network node determines the load sharing weights of the at least two first communication links based on the packet loss rates of the at least two first communication links and an implementation process in which the first network node determines the load sharing weights of the at least two first communication links based on the jitters of the at least two first communication links, refer to an implementation process in which the first network node determines the load sharing weights of the at least two first communication links based on the latencies of the at least two first communication links. Details are not described herein again.

The foregoing uses an example in which the first quality requirement includes one of a latency requirement, a packet loss rate requirement, or a jitter requirement for description. In some embodiments, the first quality requirement includes at least two of a latency requirement, a packet loss rate requirement, or a jitter requirement. In this case, the first network node may determine the load sharing weights of the at least two first communication links based on at least two of link quality: the latencies, the packet loss rates, and the jitters of the at least two first communication links. Optionally, the first network node determines initial load sharing weights of the at least two first communication links based on each link quality of the at least two first communication links, to obtain at least two initial load sharing weights of each first communication link. The first network node determines a load sharing weight of each first communication link based on the at least two initial load sharing weights of each first communication link. For example, the first network node determines an average value or a weighted value of the at least two initial load sharing weights of each first communication link, and determines the average value or the weighted value as the load sharing weight of each first communication link. In an example, the first quality requirement includes a latency requirement, a packet loss rate requirement, and a jitter requirement, and the at least two first communication links are the communication link L231 and the communication link L232. The first network node determines an initial load sharing weight w11 of the communication link L231 and an initial load sharing weight w21 of the communication link L232 based on the latency of the communication link L231 and the latency of the communication link L232. The first network node determines an initial load sharing weight w12 of the communication link L231 and an initial load sharing weight w22 of the communication link L232 based on the packet loss rate of the communication link L231 and the packet loss rate of the communication link L232. In addition, the first network node determines an initial load sharing weight w13 of the communication link L231 and an initial load sharing weight w23 of the communication link L232 based on the jitter of the communication link L231 and the jitter of the communication link L232. The first network node determines an average value or a weighted value of the initial load sharing weights w11, w12, and w13 as the load sharing weight w1 of the communication link L231. The first network node determines an average value or a weighted value of the initial load sharing weights w21, w22, and w23 as the load sharing weight w2 of the communication link L232.

The foregoing descriptions of a case in which the first network node determines the load sharing weights of the at least two first communication links are merely an example. The first network node may alternatively determine the load sharing weights of the at least two first communication links in another manner. For example, in some embodiments, the first network node includes a weight determining formula used to determine a load sharing weight, and the first network node determines the load sharing weights of the at least two first communication links based on the link quality of the at least two first communication links and the weight determining formula. In some other embodiments, the first network node includes a mapping relationship between link quality and a load sharing weight, and the first network node determines the load sharing weights of the at least two first communication links based on the link quality of the at least two first communication links and the mapping relationship. A manner in which the first network node determines the load sharing weight is not limited in this embodiment of this application. Because link quality of a communication link dynamically changes, in this embodiment of this application, a load sharing weight of the communication link is determined based on the link quality of the communication link, so that the load sharing weight of the communication link can be dynamically adjusted.

In conclusion, this embodiment of this application provides a packet transmission method. The SR path includes the first network node and the second network node. There are the plurality of communication links between the first network node and the second network node. The first packet obtained by the first network node carries the first link quality identifier. The first link quality identifier indicates the first quality requirement on the communication link between the first network node and the second network node. The first network node determines, based on the first link quality identifier carried in the first packet, the first communication link that is included in the plurality of communication links and that meets the first quality requirement, and forwards the first packet to the second network node through the first communication link. That is, in this embodiment of this application, a packet transmitted on the SR path carries a link quality identifier that indicates a link quality requirement, and a network node on the SR path selects a communication link that meets the link quality requirement indicated by the link quality identifier, to forward the packet. Therefore, the packet can be transmitted on the SR path that meets the requirement, and a quantity of transmission paths maintained by the head node of the SR path can be reduced, where for example, a quantity of segment lists maintained by the head node of the SR path is reduced, so as to avoid impact on performance of the head node due to an excessively large quantity of transmission paths maintained by the head node.

In an optional embodiment, before S4021, the first network node may obtain the first mapping relationship.

In an implementation, the first mapping relationship is configured by a user on the first network node. For example, the user configures the first mapping relationship on the first network node through a command line, and the first network node may obtain the first mapping relationship configured by the user.

In another implementation, the first mapping relationship is sent by the controller to the first network node, and the first network node may receive the first mapping relationship sent by the controller. For example, the first network node receives a first control message sent by the controller, where the first control message includes the first mapping relationship. Optionally, the first control message is a BGP message, a NETCONF message, a PCEP message, or a message based on another proprietary protocol. This is not limited in embodiments of this application.

In an optional embodiment, before S4022, the first network node may obtain the second mapping relationship.

The second mapping relationship includes a mapping relationship between the first link identifier (namely, the link identifier of the first communication link) and the link quality of the first communication link. The first network node may obtain the link quality of the first communication link and the first link identifier, and the first network node generates the second mapping relationship based on the first link identifier and the link quality of the first communication link.

In this embodiment of this application, the second mapping relationship includes a mapping relationship between link identifiers of the plurality of communication links between the first network node and the second network node and the link quality of the plurality of communication links. The first network node may obtain a link identifier of each communication link between the first network node and the second network node and link quality of the communication link, and the first network node generates the second mapping relationship based on the link identifiers of the plurality of communication links and the link quality of the plurality of communication links.

Optionally, the first network node performs a link detection process for each communication link between the first network node and the second network node, to obtain the link quality of the communication link. An example in which the first network node obtains link quality of a communication link 1 between the first network node and the second network node is used for description. The first network node may obtain first statistics data of the communication link 1 within first duration, and the first network node may indicate the second network node to obtain and send second statistics data of the communication link 1 within the first duration to the first network node. The first network node determines the link quality of the communication link 1 based on the first statistics data of the communication link 1 within the first duration and the second statistics data of the communication link 1 within the first duration. The first statistics data may include at least one of the following: a quantity of packets sent by the first network node through the communication link 1 within the first duration, or sending timestamps of the packets sent by the first network node through the communication link 1 within the first duration. The second statistics data may include at least one of the following: a quantity of packets received by the second network node through the communication link 1 within the first duration, or receiving timestamps of the packets received by the second network node through the communication link 1 within the first duration. The first network node may determine a packet loss quantity and/or a packet loss rate of the communication link 1 based on a quantity of packets sent by the first network node through the communication link 1 within the first duration and a quantity of packets received by the second network node through the communication link 1 within the first duration. In addition, the first network node may determine a latency and a jitter of the communication link 1 based on the sending timestamps of the packets sent by the first network node through the communication link 1 within the first duration and the receiving timestamps of the packets received by the second network node through the communication link 1 within the first duration.

In an optional embodiment, refer to FIG. 1. The first network node may be the network node 102, the second network node may be the network node 103, and the communication link 1 may be any communication link between the network node 102 and the network node 103. The network node 102 may perform the foregoing link detection process for each communication link between the network node 102 and the network node 103, to obtain link quality of the communication link.

The foregoing describes the packet transmission method in this application, and the following describes embodiments of transmission control methods in this application.

FIG. 6 is a flowchart of a transmission control method according to an embodiment of this application. The transmission control method is applied to a controller. As shown in FIG. 6, the method includes the following steps S601 and S602.

S601: The controller obtains a first link quality identifier, where the first link quality identifier indicates a first quality requirement on a communication link between a first network node and a second network node, both the first network node and the second network node are network nodes on an SR path, and there are a plurality of communication links between the first network node and the second network node.

Link quality of any communication link may include at least one of the following: a latency of the any communication link, a jitter of the any communication link, or a packet loss rate of the any communication link. The first link quality identifier indicates the first quality requirement on the communication link between the first network node and the second network node, and the first quality requirement may include at least one of the following: a latency requirement, a jitter requirement, or a packet loss rate requirement. A latency requirement on the any communication link includes that the latency of the any communication link is less than a latency threshold. A jitter requirement on the any communication link includes that the jitter of the any communication link is less than a jitter threshold. A packet loss rate requirement on the any communication link includes that the packet loss rate of the any communication link is less than a packet loss rate threshold. The latency threshold, the jitter threshold, and the packet loss rate threshold may be flexibly set based on a service requirement. For different services, the latency threshold may be different, the jitter threshold may be different, and the packet loss rate threshold may be different. Values of the latency threshold, the jitter threshold, and the packet loss rate threshold are not limited in embodiments of this application.

In an optional embodiment, a user configures the first link quality identifier on the controller, and the controller obtains the first link quality identifier configured by the user. For example, the controller obtains the first link quality identifier by obtaining a first mapping relationship including the first link quality identifier. In an implementation, the user may configure the first mapping relationship on the controller, where the first mapping relationship includes a mapping relationship between the first link quality identifier and the first quality requirement, and the controller obtains the first mapping relationship configured by the user. In another implementation, the user may enter configuration information on the controller, and the controller generates the first mapping relationship based on the configuration information entered by the user. A manner in which the controller obtains the first mapping relationship is not limited in this application.

S602: The controller sends a first control message to the first network node, where the first control message includes the first link quality identifier.

Optionally, the first link quality identifier is included in the first mapping relationship, and the first control message includes the first mapping relationship, so that the first control message includes the first link quality identifier. The first control message may be a BGP message, a NETCONF message, a PCEP message, or a message based on another proprietary protocol. This is not limited in embodiments of this application.

In conclusion, this embodiment of this application provides a transmission control method. The SR path includes the first network node and the second network node. There are the plurality of communication links between the first network node and the second network node. The controller may obtain the first link quality identifier, and send the first link quality identifier to the first network node. The first network node may determine the first quality requirement on the communication link between the first network node and the second network node based on the first link quality identifier. Then, after the first network node obtains a first packet carrying the first link quality identifier, the first network node may determine, from the plurality of communication links between the first network node and the second network node based on the first link quality identifier carried in the first packet, a first communication link that meets the first quality requirement, and forward the first packet to the second network node through the first communication link. That is, in this embodiment of this application, a packet transmitted on the SR path carries a link quality identifier that indicates a link quality requirement, and a network node on the SR path selects a communication link that meets the link quality requirement indicated by the link quality identifier, to forward the packet. Therefore, a quantity of transmission paths maintained by a head node of the SR path can be reduced, where for example, a quantity of segment lists maintained by the head node of the SR path can be reduced, so as to avoid impact on performance of the head node due to an excessively large quantity of transmission paths maintained by the head node.

FIG. 7 is a flowchart of another transmission control method according to an embodiment of this application. The transmission control method is applied to a controller. As shown in FIG. 7, the method includes the following steps S701 and S702.

S701: The controller determines a segment list based on a network topology of an SR network and a quality of service requirement, where the segment list includes a first link quality identifier, the SR network includes an SR path, the SR path includes a first network node and a second network node, there are a plurality of communication links between the first network node and the second network node, and the first link quality identifier indicates a first quality requirement on the communication link between the first network node and the second network node.

The controller may determine the segment list by performing path computation based on the network topology of the SR network and the quality of service requirement. Optionally, the controller excludes, based on the quality of service requirement and link quality of the communication links in the SR network, a communication link that does not meet the quality of service requirement and that is in the SR network, to obtain an excluded network topology. The controller determines, based on the excluded network topology, an SR path that meets the quality of service requirement, and determines a segment list that indicates the SR path. The segment list includes the first link quality identifier. For example, the segment list includes a first link identifier, the first link identifier indicates a first communication link between the first network node and the second network node, and the first link quality identifier may be the first link identifier.

S702: The controller sends a second control message to a head node of the SR path, where the second control message includes the segment list.

The second control message may be a BGP message, a NETCONF message, a PCEP message, or a message based on another proprietary protocol. This is not limited in embodiments of this application.

Optionally, the head node of the SR path is the first network node, and the controller sends the second control message to the first network node.

In conclusion, according to the transmission control method provided in this embodiment of this application, the SR path includes the first network node and the second network node, and there are the plurality of communication links between the first network node and the second network node. The controller may obtain the segment list including the first link quality identifier, and send the segment list to the head node of the SR path. The head node may obtain a first packet including the segment list. The first network node (for example, the head node) may determine, based on the first link quality identifier carried in the first packet, the first communication link that meets the first quality requirement and that is in the plurality of communication links between the first network node and the second network node, and forwards the first packet to the second network node through the first communication link. That is, in this embodiment of this application, a packet transmitted on the SR path carries a link quality identifier that indicates a link quality requirement, and a network node on the SR path selects a communication link that meets the link quality requirement indicated by the link quality identifier, to forward the packet. Therefore, a quantity of transmission paths maintained by the head node of the SR path can be reduced, where for example, a quantity of segment lists maintained by the head node of the SR path can be reduced, so as to avoid impact on performance of the head node due to an excessively large quantity of transmission paths maintained by the head node.

The foregoing describes the method embodiments of this application. The following describes apparatus embodiments of this application. The apparatuses in this application may be configured to perform the methods in this application. For details that are not disclosed in the apparatus embodiments, refer to the method embodiments.

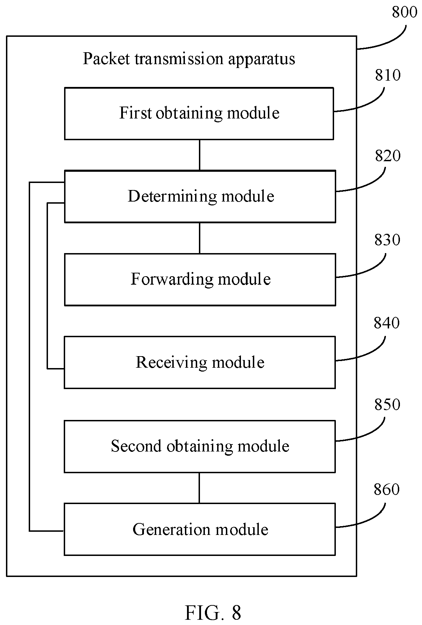

FIG. 8 is a schematic structural diagram of a packet transmission apparatus 800 according to an embodiment of this application. The packet transmission apparatus 800 is used in a first network node on an SR path, where the SR path further includes a second network node, and there are a plurality of communication links between the first network node and the second network node. For example, the packet transmission apparatus 800 is the first network node or a functional component in the first network node. Refer to FIG. 8. The packet transmission apparatus 800 includes a first obtaining module 810, a determining module 820, and a forwarding module 830.

The first obtaining module 810 is configured to obtain a first packet, where the first packet carries a first link quality identifier, and the first link quality identifier indicates a first quality requirement on the communication link between the first network node and the second network node. For function implementation of the first obtaining module 810, refer to related descriptions in the foregoing S401.

The determining module 820 is configured to determine a first communication link based on the first link quality identifier, where the plurality of communication links between the first network node and the second network node include the first communication link, and link quality of the first communication link meets the first quality requirement. For function implementation of the determining module 820, refer to related descriptions in S402.

The forwarding module 830 is configured to forward the first packet to the second network node through the first communication link. For function implementation of the forwarding module 830, refer to related descriptions in S403.

Optionally, a head node of the SR path includes a first link identifier, and the head node does not include a link identifier of a second communication link, the first link identifier indicates the first communication link, and the plurality of communication links include the second communication link.

Optionally, the head node of the SR path includes the first link identifier, the head node does not include a link identifier of a communication link other than the first communication link in the plurality of communication links, and the first link identifier indicates the first communication link.

Optionally, the first link quality identifier is the first link identifier.

Optionally, the first link identifier is a first SID.

Optionally, the first SID is an adjacency SID.

Optionally, the determining module 820 is configured to: determine the first quality requirement based on the first link quality identifier; and determine the first communication link based on the first quality requirement and link quality of the plurality of communication links.

Optionally, the determining module 820 is configured to determine the first quality requirement based on the first link quality identifier and a first mapping relationship, where the first mapping relationship includes a mapping relationship between the first link quality identifier and the first quality requirement.

Optionally, the determining module 820 is configured to determine the first communication link based on the first quality requirement and a second mapping relationship, where the second mapping relationship includes a mapping relationship between the first link identifier and the link quality of the first communication link, and the first link identifier indicates the first communication link.

Optionally, still refer to FIG. 8. The packet transmission apparatus 800 further includes a receiving module 840.

The receiving module 840 is configured to: before the determining module 820 determines the first quality requirement based on the first link quality identifier and the first mapping relationship, receive a first control message sent by a controller, where the first control message includes the first mapping relationship.

Optionally, still refer to FIG. 8. The packet transmission apparatus 800 further includes a second obtaining module 850 and a generation module 860.

The second obtaining module 850 is configured to: before the determining module 820 determines the first communication link based on the first quality requirement and the second mapping relationship, obtain the link quality of the first communication link.

The generation module 860 is configured to generate the second mapping relationship based on the first link identifier and the link quality of the first communication link.

Optionally, there are at least two first communication links, the at least two first communication links are for load sharing, and load sharing weights of the at least two first communication links are determined based on link quality of the at least two first communication links.

Optionally, link quality of any one of the plurality of communication links includes at least one of the following: a latency of the any communication link, a jitter of the any communication link, or a packet loss rate of the any communication link. The first quality requirement includes at least one of the following: a latency requirement, a jitter requirement, or a packet loss rate requirement.

Optionally, the plurality of communication links include at least one of a physical link or a logical link.

Optionally, the first packet carries a segment list, and the segment list includes the first link quality identifier.

Optionally, the first network node is the head node or an intermediate node of the SR path.

Optionally, the first network node is the head node of the SR path, and the first obtaining module 810 is configured to: receive a second control message sent by the controller, where the second control message includes the segment list, and the segment list includes the first link quality identifier; and generate the first packet based on the segment list.

Optionally, the first network node is the head node of the SR path, and the first obtaining module 810 is configured to: determine the segment list based on a network topology of an SR network and a quality of service requirement, where the segment list includes the first link quality identifier, and the SR network includes the SR path; and generate the first packet based on the segment list.

In conclusion, this embodiment of this application provides a packet transmission apparatus. The SR path includes the first network node and the second network node. There are the plurality of communication links between the first network node and the second network node. The first packet obtained by the first network node carries the first link quality identifier. The first link quality identifier indicates the first quality requirement on the communication link between the first network node and the second network node. The first network node determines, based on the first link quality identifier carried in the first packet, the first communication link that is included in the plurality of communication links and that meets the first quality requirement, and forwards the first packet to the second network node through the first communication link. That is, in this embodiment of this application, a packet transmitted on the SR path carries a link quality identifier that indicates a link quality requirement, and a network node on the SR path selects a communication link that meets the link quality requirement indicated by the link quality identifier, to forward the packet. Therefore, the packet can be transmitted on the SR path that meets the requirement, and a quantity of transmission paths maintained by the head node of the SR path can be reduced, where for example, a quantity of segment lists maintained by the head node of the SR path is reduced, so as to avoid impact on performance of the head node due to an excessively large quantity of transmission paths maintained by the head node.

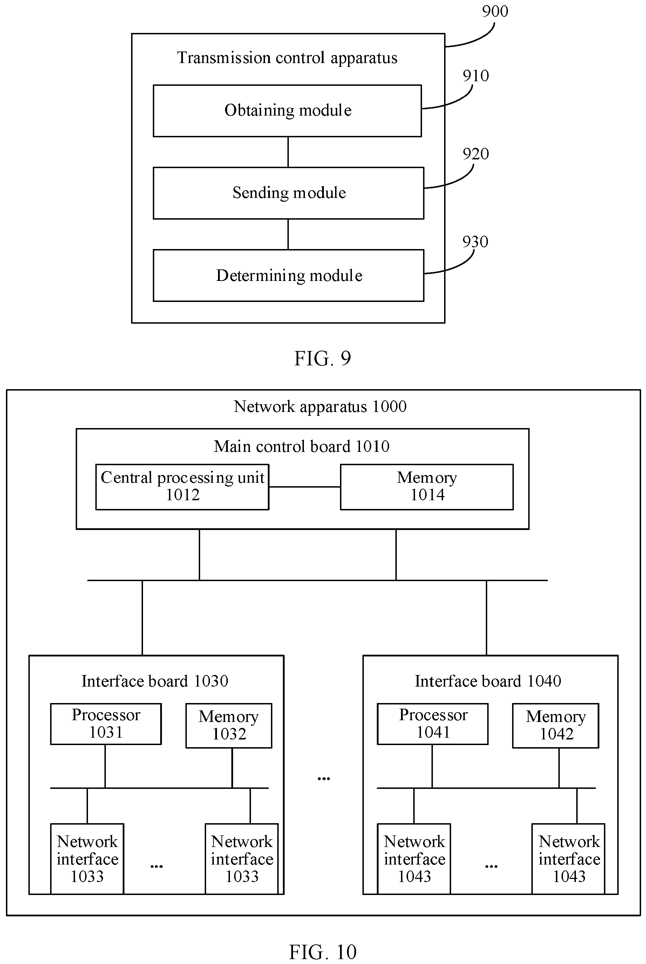

FIG. 9 is a schematic structural diagram of a transmission control apparatus 900 according to an embodiment of this application. Refer to FIG. 9. The transmission control apparatus 900 includes an obtaining module 910 and a sending module 920.

The obtaining module 910 is configured to obtain a first link quality identifier, where the first link quality identifier indicates a first quality requirement on a communication link between a first network node and a second network node, both the first network node and the second network node are network nodes on an SR path, and there are a plurality of communication links between the first network node and the second network node. For function implementation of the obtaining module 910, refer to related descriptions in the foregoing S601.

The sending module 920 is configured to send a first control message to the first network node, where the first control message includes the first link quality identifier. For function implementation of the sending module 920, refer to related descriptions in the foregoing S602.

Optionally, the plurality of communication links include a first communication link and a second communication link, a head node of the SR path includes a first link identifier, the head node does not include a link identifier of the second communication link, and the first link identifier indicates the first communication link.

Optionally, the plurality of communication links include the first communication link, the head node of the SR path includes the first link identifier that indicates the first communication link, and the head node does not include a link identifier of a communication link other than the first communication link in the plurality of communication links.

Optionally, the first link quality identifier is the first link identifier.

Optionally, the first link identifier is a first SID.

Optionally, the first SID is an adjacency SID.

Optionally, the obtaining module 910 is configured to obtain a first mapping relationship, where the first mapping relationship includes a mapping relationship between the first link quality identifier and the first quality requirement, and the first control message includes the first mapping relationship.

Optionally, link quality of any one of the plurality of communication links includes at least one of the following: a latency of the any communication link, a jitter of the any communication link, or a packet loss rate of the any communication link. The first quality requirement includes at least one of the following: a latency requirement, a jitter requirement, or a packet loss rate requirement.

Optionally, the plurality of communication links include at least one of a physical link or a logical link.

Optionally, still refer to FIG. 9. The transmission control apparatus 900 further includes a determining module 930.

The determining module 930 is configured to determine a segment list based on a network topology of an SR network and a quality of service requirement, where the segment list includes the first link quality identifier, and the SR network includes the SR path. For function implementation of the determining module 930, refer to related descriptions in the foregoing S701.

The sending module 920 is further configured to send a second control message to the head node of the SR path, where the second control message includes the segment list. For function implementation of the sending module 920, refer to related descriptions in the foregoing S702.

In conclusion, this embodiment of this application provides a transmission control apparatus. The SR path includes the first network node and the second network node. There are the plurality of communication links between the first network node and the second network node. A controller may obtain the first link quality identifier, and send the first link quality identifier to the first network node. The first network node may determine the first quality requirement on the communication link between the first network node and the second network node based on the first link quality identifier. Then, after the first network node obtains the first packet carrying the first link quality identifier, the first network node may determine, from the plurality of communication links between the first network node and the second network node based on the first link quality identifier carried in the first packet, the first communication link that meets the first quality requirement, and forward the first packet to the second network node through the first communication link. That is, in this embodiment of this application, the packet transmitted on the SR path carries the link quality identifier that indicates the link quality requirement, and the network node on the SR path selects the communication link that meets the link quality requirement indicated by the link quality identifier, to forward the packet. Therefore, the quantity of transmission paths maintained by the head node of the SR path can be reduced, where for example, the quantity of segment lists maintained by the head node of the SR path can be reduced, so as to avoid impact on the performance of the head node due to the excessively large quantity of transmission paths maintained by the head node.

The packet transmission apparatus and the transmission control apparatus provided in embodiments of this application may alternatively be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof. Alternatively, the methods provided in the foregoing method embodiments may be implemented by using software. When the packet transmission method provided in the foregoing method embodiment is implemented by using software, the modules in the foregoing packet transmission apparatus may also be software modules. When the transmission control methods provided in the foregoing method embodiments are implemented by using software, the modules in the foregoing transmission control apparatus may also be software modules.

FIG. 10 is a schematic structural diagram of a network apparatus 1000 according to an embodiment of this application. The network apparatus 1000 may be a network node or a functional component in the network node. The network apparatus 1000 includes a main control board 1010, an interface board 1030, and an interface board 1040. When there are a plurality of interface boards, a switching board (not shown in FIG. 10) may be further included. The switching board is configured to complete data exchange between interface boards (where the interface board is also referred to as a line card or a service board).

The main control board 1010 is configured to complete functions such as system management, node maintenance, and protocol processing. The interface board 1030 and the interface board 1040 are configured to provide various service interfaces (for example, a POS interface, a GE interface, and an ATM interface) and forward packets. The main control board 1010 mainly includes three types of functional units: a system management and control unit, a system clock unit, and a system maintenance unit. The main control board 1010, the interface board 1030, and the interface board 1040 are connected to a system backplane through a system bus to implement interworking. The interface board 1030 includes one or more processors 1031. The processor 1031 is configured to: control and manage the interface board 1030 and communicate with a central processing unit 1012 on the main control board 1010. A memory 1032 on the interface board 1030 is configured to store a link identifier, a link quality identifier, the foregoing first mapping relationship, the foregoing second mapping relationship, and the like. The interface board 1030 includes one or more network interfaces 1033, configured to receive and send a packet. A specific implementation process is not described herein. As shown in FIG. 10, the main control board 1010 further includes a memory 1014. The memory 1014 is configured to store system management information, a protocol, and the like. This is not limited in embodiments of this application.

As shown in FIG. 10, this embodiment includes a plurality of interface boards, and uses a distributed forwarding mechanism. In this mechanism, operations on the interface board 1040 are basically similar to operations on the interface board 1030. For example, the interface board 1040 includes one or more network interfaces 1043 configured to receive and send a packet, includes a memory 1042 configured to store a link identifier, a link quality identifier, the foregoing first mapping relationship, and the foregoing second mapping relationship, and includes a processor 1041 configured to control and manage the interface board 1040 and communicate with the central processing unit 1012 on the main control board 1010.

The processor 1031 in the interface board 1030 and/or the processor 1041 in the interface board 1040 in FIG. 10 may be dedicated hardware or chip, for example, a network processor or an application-specific integrated circuit, to implement the foregoing functions. This implementation is generally referred to as a manner of using dedicated hardware or chip for processing on a forwarding plane. In another implementation, the processor 1031 in the interface board 1030 and/or the processor 1041 in the interface board 1040 may also use a general-purpose processor, for example, a central processing unit (central processing unit, CPU).

In addition, it should be noted that there may be one or more main control boards. When there are a plurality of main control boards, the main control boards may include a primary main control board and a secondary main control board. There may be one or more interface boards, and a network node having a stronger data processing capability provides more interface boards. If there are a plurality of interface boards, the plurality of interface boards can communicate with each other by using one or more switching boards, and the plurality of interface boards can jointly implement load balancing and redundancy backup. In a centralized forwarding architecture, the network node may not need the switching board, and the interface board provides a function of processing service data of an entire system. In a distributed forwarding architecture, the network node includes a plurality of interface boards. Data exchange between the plurality of interface boards may be implemented by using a switching board, and the plurality of interface boards can provide a large-capacity data exchange and processing capability. Therefore, a data access and processing capability of a network node in the distributed architecture is better than that of a network node in the centralized architecture. A specific architecture that is to be used depends on a networking deployment scenario. This is not limited herein.

In an optional implementation, the memory 1032 and/or the memory 1042 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only Memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory 1032 may exist independently, and is connected to the processor 1031 through a communication bus, or may be integrated with the processor 1031. The memory 1042 may exist independently, and is connected to the processor 1041 through a communication bus, or may be integrated with the processor 1041.

The memory 1032 is configured to store program code, and the processor 1031 controls execution of the program code, to perform some or all steps of the methods provided in the foregoing embodiments. The processor 1031 is configured to execute the program code stored in the memory 1032. The program code may include one or more software modules. The one or more software modules may be the functional modules in FIG. 8. The memory 1042 may also be configured to store program code, and the processor 1041 controls execution of the program code, to perform some or all steps of the methods provided in the foregoing embodiments. Similarly, the memory 1014 may also be configured to store program code, and the central processing unit 1012 controls execution of the program code, to perform some or all steps of the methods provided in the foregoing embodiments.

In an optional implementation, the network interface 1033 and the network interface 1043 use any transceiver-type apparatus, and are configured to communicate with another node, device, or communication network, for example, an Ethernet, a radio access network (radio access network, RAN), or a wireless local area network (wireless local area network, WLAN).

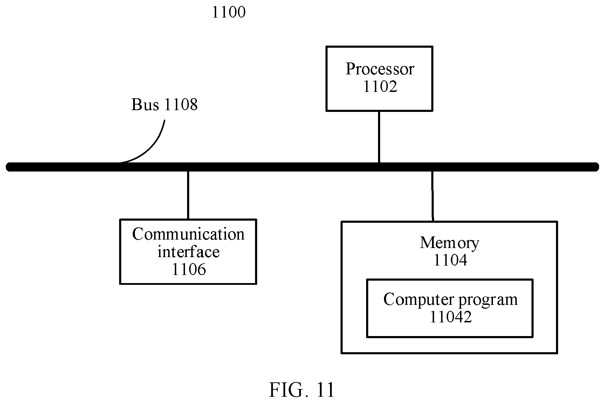

FIG. 11 is a schematic structural diagram of another network apparatus 1100 according to an embodiment of this application. The network apparatus 1100 may be a network node or a functional component in the network node, or may be a controller or a functional component in the controller. Refer to FIG. 11. The network apparatus 1100 includes a processor 1102, a memory 1104, a communication interface 1106, and a bus 1108. The processor 1102, the memory 1104, and the communication interface 1106 are communicatively connected through the bus 1108. A connection manner between the processor 1102, the memory 1104, and the communication interface 1106 shown in FIG. 11 is merely an example. In an implementation process, the processor 1102, the memory 1104, and the communication interface 1106 may also be connected in a connection manner other than the bus 1108.

The memory 1104 is configured to store a computer program 11042. The computer program 11042 may include instructions and data. The memory 1104 may be various types of storage media, for example, a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 1102 may be a general-purpose processor. The general-purpose processor may be a processor that reads and executes a computer program (for example, the computer program 11042) stored in a memory (for example, the memory 1104) to perform a specific step and/or operation. In a process of performing the foregoing steps and/or operations, the general-purpose processor may use data stored in the memory (for example, the memory 1104). For example, the stored computer program may be executed to implement related functions of the first obtaining module 810, the determining module 820, the second obtaining module 850, the generation module 860, the obtaining module 910, and the determining module 930. The general-purpose processor may be a CPU. The processor 1102 may alternatively be a dedicated processor. The dedicated processor is a processor specially designed to perform a specific step and/or operation. The dedicated processor may be a digital signal processor (digital signal processor, DSP), an ASIC, an FPGA, or the like. The processor 1102 may alternatively be a combination of a plurality of processors, for example, a multi-core processor. The processor 1102 includes at least one circuit, to perform all or some of the steps of the packet transmission method and the transmission control method provided in the foregoing embodiments.

The communication interface 1106 may include an interface that is used to implement component interconnection inside the network apparatus 1100, for example, an input/output (input/output, I/O) interface, a physical interface, or a logical interface, and an interface that is used to implement interconnection between the network apparatus 1100 and another node (for example, a network node). The physical interface may be a gigabit Ethernet (gigabit Ethernet, GE) interface, and may be configured to implement interconnection between the network apparatus 1100 and another node. The logical interface is an interface inside the network apparatus 1100, and may be configured to implement interconnection of components inside the network apparatus 1100. It is easy to understand that the communication interface 1106 may be used for communication between the network apparatus 1100 and another node. For example, the communication interface 1106 is used for packet sending and receiving between the network apparatus 1100 and the another node. The communication interface 1106 may implement related functions of the forwarding module 830, the receiving module 840, and the sending module 920. The communication interface 1106 may further include a transceiver to send and receive a packet. The transceiver may also implement related functions of the forwarding module 830, the receiving module 840, and the sending module 920.

The bus 1108 may be any type of communication bus, for example, a system bus, configured to implement interconnection among the processor 1102, the memory 1104, and the communication interface 1106.

The foregoing components may be separately disposed on chips that are independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The network apparatus 1100 shown in FIG. 11 is merely an example. In an implementation process, the network apparatus 1100 may further include other components, which are not enumerated one by one in this specification. The network apparatus 1100 shown in FIG. 11 transmits a packet by performing all or some steps of the methods provided in the foregoing embodiments.

An embodiment of this application provides a communication system, including a first network node and a controller. The first network node includes the packet transmission apparatus 800 shown in FIG. 8, or the first network node includes the network apparatus shown in FIG. 10 or FIG. 11. The controller includes the transmission control apparatus 900 shown in FIG. 9, or the controller includes the network apparatus shown in FIG. 10 or FIG. 11.

An embodiment of this application provides a computer-readable storage medium. The computer-readable storage medium stores a computer program. When the computer program is executed (for example, executed by a network node, a controller, or one or more processors), all or some of the steps of the methods provided in the foregoing method embodiments are implemented.

An embodiment of this application provides a computer program product. The computer program product includes a program or code. When the program or the code is executed (for example, executed by a network node, a controller, or one or more processors), all or some of the steps of the methods provided in the foregoing method embodiments are implemented.

An embodiment of this application provides a chip. The chip includes a programmable logic circuit and/or program instructions. When the chip runs, the chip is configured to implement all or some of the steps of the methods provided in the foregoing method embodiments.

In embodiments of this application, the link quality identifier may be a link identifier. In this application, a new meaning is assigned to the link identifier (for example, an adjacency SID), so that the link identifier not only indicates a communication link, but also indicates a link quality requirement on the communication link. In other words, the link identifier may be reused as a link quality identifier to indicate the link quality requirement. When the link quality identifier is a link identifier, the "link quality identifier" in the foregoing embodiments may be replaced with a "link identifier", and the technical solution provided in the foregoing embodiments is still valid.

All or some of the foregoing embodiments may be implemented through software, hardware, firmware, or any combination thereof. When software is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that, in this application, "at least one" means one or more, and "a plurality of" means two or more. In this application, unless otherwise specified, the symbol "/" generally means "or". For example, A/B may represent A or B. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, terms such as "first", "second", and "third" are used to distinguish same items or similar items having basically same functions. A person skilled in the art may understand that the terms such as "first", "second", and "third" do not limit a quantity and an execution sequence.

For different types of embodiments such as the method embodiments and the apparatus embodiments provided in embodiments of this application, refer to each other. This is not limited in embodiments of this application. A sequence of the operations of the method embodiments provided in embodiments of this application can be properly adjusted, and the operations can be correspondingly added or deleted based on a situation. Any modified method that can be easily figured out by a person skilled in the art without departing from a technical scope disclosed in this application shall fall within the protection scope of this application, and therefore details are not described again.

In the corresponding embodiments provided in this application, it should be understood that the disclosed apparatuses and the like may be implemented in other composition manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, that is, may be located in one position, or may be distributed on a plurality of network nodes. Some or all of the units may be selected based on actual requirements to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A packet transmission method, applied to a first network node on a segment routing, SR, path, wherein the SR path further comprises a second network node, there are a plurality of communication links between the first network node and the second network node, and the method comprises:
obtaining (S401), by the first network node, a first packet, wherein the first packet carries a first link quality identifier, and the first link quality identifier indicates a first quality requirement on the communication link between the first network node and the second network node;
determining (S402), by the first network node, a first communication link based on the first link quality identifier, wherein the plurality of communication links comprise the first communication link, and link quality of the first communication link meets the first quality requirement; and
forwarding (S403), by the first network node, the first packet to the second network node through the first communication link.

2. The method according to claim 1, wherein a head node of the SR path comprises a first link identifier, and the head node does not comprise a link identifier of a second communication link, the first link identifier indicates the first communication link, and the plurality of communication links comprise the second communication link.

3. The method according to claim 1 or 2, wherein the head node of the SR path comprises the first link identifier, the head node does not comprise a link identifier of a communication link other than the first communication link in the plurality of communication links, and the first link identifier indicates the first communication link.

4. The method according to claim 2 or 3, wherein the first link quality identifier is the first link identifier.

5. The method according to any one of claims 2 to 4, wherein the first link identifier is a first segment identifier, SID.

6. The method according to claim 5, wherein the first SID is an adjacency SID.

7. The method according to any one of claims 1 to 6, wherein the determining (S402), by the first network node, a first communication link based on the first link quality identifier comprises:
determining, by the first network node, the first quality requirement based on the first link quality identifier; and
determining, by the first network node, the first communication link based on the first quality requirement and link quality of the plurality of communication links.

8. The method according to claim 7, wherein the determining, by the first network node, the first quality requirement based on the first link quality identifier comprises:
determining, by the first network node, the first quality requirement based on the first link quality identifier and a first mapping relationship, wherein the first mapping relationship comprises a mapping relationship between the first link quality identifier and the first quality requirement.

9. The method according to claim 7 or 8, wherein the determining, by the first network node, the first communication link based on the first quality requirement and link quality of the plurality of communication links comprises:
determining, by the first network node, the first communication link based on the first quality requirement and a second mapping relationship, wherein the second mapping relationship comprises a mapping relationship between the first link identifier and the link quality of the first communication link, and the first link identifier indicates the first communication link.

10. The method according to claim 8, wherein before the determining, by the first network node, the first quality requirement based on the first link quality identifier and a first mapping relationship, the method further comprises:
receiving, by the first network node, a first control message sent by a controller, wherein the first control message comprises the first mapping relationship.

11. A transmission control method, wherein the method comprises:
obtaining (S601), by a controller, a first link quality identifier, wherein the first link quality identifier indicates a first quality requirement on a communication link between a first network node and a second network node, both the first network node and the second network node are network nodes on a segment routing, SR, path, and there are a plurality of communication links between the first network node and the second network node; and
sending (S602), by the controller, a first control message to the first network node, wherein the first control message comprises the first link quality identifier.

12. The method according to claim 11, wherein the plurality of communication links comprise a first communication link and a second communication link, a head node of the SR path comprises a first link identifier, the head node does not comprise a link identifier of the second communication link, and the first link identifier indicates the first communication link.

13. The method according to claim 11 or 12, wherein the plurality of communication links comprise the first communication link, the head node of the SR path comprises the first link identifier, the head node does not comprise a link identifier of a communication link other than the first communication link in the plurality of communication links, and the first link identifier indicates the first communication link.

14. A packet transmission apparatus, comprising a memory and a processor, wherein
the memory is configured to store a computer program; and
the processor is configured to execute a computer program stored in the memory, to enable the packet transmission apparatus to perform the packet transmission method according to any one of claims 1 to 10.

15. A transmission control apparatus, comprising a memory and a processor, wherein
the memory is configured to store a computer program; and
the processor is configured to execute a computer program stored in the memory, to enable the transmission control apparatus to perform the transmission control method according to any one of claims 11 to 13.
